# EUROPEAN PATENT SPECIFICATION

(11) **EP 3 794 078 B1**
(45) Date of publication and mention of the grant of the patent: **28.09.2022**
(21) Application number: 19728230.4
(22) Date of filing: 15.05.2019
(51) Int. Cl.: C09D 5/00

(54) **MULTIFUNCTIONAL COATINGS AND ADHESIVE COMPOSITIONS FOR FASTENERS**
MULTIFUNKTIONELLE BESCHICHTUNGEN UND KLEBSTOFFZUSAMMENSETZUNGEN FÜR BEFESTIGUNGSMITTEL
REVÊTEMENTS MULTIFONCTIONNELS ET COMPOSITIONS ADHÉSIVES POUR ÉLÉMENTS DE FIXATION

(30) Priority: 15.05.2018 US 201862671712 P
(43) Date of publication of application: 24.03.2021
(73) Proprietor: ND Industries, Inc., Clawson, MI 48017 (US)
(72) Inventor: CARLSON, David, Rochester Hills, Michigan 48307 (US); FOUKES, Richard John, Shelby Township, Michigan 48315 (US); RAWLS, Norman Martin, Sterling Heights, Michigan 48312 (US); SNYDER, Desiree Nicole, Metamora, Michigan 48455 (US); CIACIUCH, Cavin Wayne, Warren, Michigan 48088 (US)
(74) Representative: Haseltine Lake Kempner LLP
(86) International application number: PCT/US2019/032487
(87) International publication number: WO 2019/222402

(56) References cited:
- US-A1- 2004 228 998
- US-A1- 2004 258 922
- US-A1- 2016 068 726
- US-A1- 2017 166 709

## Description

### FIELD OF THE INVENTION

The present invention generally relates to coating compositions, and more specifically, coating compositions that can be used to form fastener adhesives, to adhesives formed from the coating compositions, and to articles including the coating compositions (e.g. coated fasteners). The present invention also relates to powdered adhesive compositions, and more specifically to powdered adhesive compositions that can be used to secure fasteners (e.g. in boreholes). Related methods and uses are also provided herein.

### DESCRIPTION OF THE RELATED ART

In many applications, fasteners provide an efficient means for mechanically joining two parts together. Some fasteners can be of the self-locking type. Self-locking functionality may be achieved by using a special coating patch that is adhered to all or a portion of the fastener surface. The fastener may include other coatings to control torque tension behavior or to provide consistent clamping force at a specific force. The coating may be present as a masking element to prevent damage or contamination fouling to the fastener prior to application of a nut. Such contamination may occur during certain coating and painting processes. Such coatings may also provide anti-seizing functions. In other cases, a coating may be applied to enhance sealing between the mechanical fastener and the aperture in which it is inserted to prevent intrusion of fluids, gases or particulate matter in a cavity or to retain fluids or gases within the cavity.

Functional coatings may be present on plugs to provide locking, lubrication, anti-seizing, masking or sealing. In certain instances, the locking function can be minimized to permit removal of the fastener or plug without special tools or treatment such as heating so as to prevent destruction of the fastener or plug or the associated aperture. In such situations, compositions with a low (e.g. less than 75 in·lbs) or medium (e.g. 75-150 in·lbs) breakaway torque are suitable, for example, on an M10 fastener or plug.

In some applications, the coating on the fastener or plug can perform more than one of the functions mentioned above imparted by a single coating composition. While some coating compositions may perform in a manner that provides locking and some fluid resistance functions, such composition's dual functionality or multiple functionality is possible only in very limited applications. In a large number of applications, the composition is limited to single functionality. To provide a fastener or plug with multiple functionalities, the part typically is separately coated multiple times, in multiple steps with multiple compositions.

US 2016/068726 discloses an adhesive composition comprising an epoxy resin, a binder and a curing agent. The epoxy resin is typically encapsulated. After rupture of the encapsulated epoxy resin, the composition cures to form an adhesive. The composition is useful for articles such as fasteners and is disposed on a threaded surface of the fastener. US 2004/258922 discloses water-based adhesive compositions that include epoxy capsules and a polymeric amine that is water soluble or water dispersible. The epoxy capsules include an outer shell material and an epoxy resin encapsulated by the outer shell material. The polymeric amine functions as an epoxy curative and as a binder resin. The compositions are suitable for use as mechanical fastener adhesives. US 2004/228998 discloses a curable preform in an uncured state has a tensile strength of greater than one pound per square inch and a film shape of a disk, washer, U-shaped piece, strip, and polygon and is sized to engage a fastener head underside. The preform is composed of a curable liquid precursor having a polymer powder mixed therethrough. US 2017/166709 discloses methods and formulations for the microencapsulation of aminosiloxanes, for example for use as an additive in protective material formulations such as those used in the protection and/or joining of metal substrates.

Accordingly, there remains room for improvement to provide a single coating for a fastener or plug that can serve multiple functions, and/or to provide a coating composition that provides enhanced single function properties.

### BRIEF SUMMARY OF THE INVENTION

The present invention is defined in and by the appended claims. Thus, in one aspect a coating composition is provided. The coating composition comprises: A) an epoxy curing agent component; B) a microencapsulated epoxy resin component; C) an expansion agent component; D) a binder component; and E) a solvent component. The microencapsulated epoxy resin component B) and the expansion agent component C) are present in a weight ratio of from about 15:1 to about 1:1. The coating composition can be used for forming a fastener adhesive.

### BRIEF DESCRIPTION OF THE DRAWINGS

FIG. 1 is a chart illustrating extraction force test results for inventive and comparative examples of fasteners installed in concrete.
FIG. 2 is a chart illustrating removal torque test results for inventive and comparative examples of fasteners installed in concrete.
FIG. 3 is another chart illustrating removal torque test results for inventive and comparative examples of fasteners installed in concrete.
FIG. 4 is a chart illustrating removal torque (after impact) test results for inventive and comparative examples of fasteners installed in concrete.
FIG. 5 is a chart illustrating removal torque test results for inventive and comparative examples of fasteners (deck screws) installed in treated wood.
FIG. 6 is a chart illustrating removal torque test results for inventive and comparative examples of fasteners (exterior screws) installed in treated wood.
FIG. 7 is a chart illustrating removal torque test results for inventive and comparative examples of fasteners installed in medium-density fiberboard (MDF).

### DETAILED DESCRIPTION OF THE INVENTION

Disclosed is a coating composition. The coating composition may also be referred to herein as an "adhesive composition" or simply as the "composition." In various embodiments, the coating composition can be in a wet form or in a dry form. The physical form of the coating composition may depend on, for example, time of manufacture, end application, etc. While wet, the coating composition may be referred to in the art as a solvent-based coating composition or a solvent-based adhesive composition.

As described below, the composition is generally liquid (or wet) during formation and solid (or dry) after formation and application. When used in conjunction with a fastener, the composition may be referred to in the art as a fastener coating or a fastener adhesive.

The composition generally cures to form an adhesive. Drying is distinguished from curing. For example, drying merely drives (or flashes) a carrier/vehicle (e.g. solvent) from the composition without initiating curing or crosslinking of the components thereof.

A method of making the composition, an article, and an assembly including the article are also disclosed. Exemplary articles include, but are not limited to, fasteners, such as anchors, screws, bolts, nuts, pipe joints, threaded nails, and the like. The disclosure is not limited to a particular type of fastener. A method of making the article is also disclosed.

As used herein, the term "coating composition," is generally used prior to initiating cure of the coating composition, and can refer to the coating composition while in either a liquid, wet or dry form. The term "adhesive," is generally used any time after cure of the coating composition is initiated, and need not refer to the adhesive in a final cure state. Cure of the adhesive is generally initiated, for example, during or after a coated fastener is put in place (or installed) for its end application.

### Coating Composition

In a general embodiment, the composition comprises: A) an epoxy curing agent component; B) a microencapsulated epoxy resin component; C) an expansion agent component; D) a binder component; and E) a solvent component. In various embodiments, the composition consists essentially of components A) to E).

While wet, the composition further comprises the solvent component, and while dry, the composition is substantially to completely free of the solvent component. Specifically, the composition generally comprises the solvent component during formation; however, the solvent component may be absent from the composition after formation and application (e.g. after drying).

It is to be appreciated that the parts by weight values described below generally relate to the composition while in a liquid/wet form. One of ordinary skill in the art can readily normalize such values to determine parts by weight when the composition is in a solid/dry form.

In various embodiments, the composition can further comprise one or more optional components. Examples of such components include conventional additives, such as anti-settling components, anti-caking components, colorant components, filler components, plasticizer components, etc. In various embodiments, the composition further includes one or more components described in U.S. Patent App. Pub. No. 2004/0258922 A1 to Willett et al. (hereinafter "Willett"), in U.S. Patent No. 9,404,015 B2 to Hable et al. (hereinafter "Hable"), and/or U.S. Patent No. 10,214,668 B2 to Snyder et al. (hereinafter "Snyder").

### Epoxy Curing Agent

Various types of epoxy curing agents ("curing agents") can be utilized in the composition. The curing agent is different from the binder. In various embodiments, the curing agent comprises an amine and/or an amine adduct. The latter can be useful for instances where the composition is UV-curable. For example, an amine functional epoxy-amine adduct can be utilized; however, other types of amines can also be used for such compositions, including, for example, one or more of the tertiary amines described below.

Suitable amine curing agents can be selected from the group consisting of aliphatic, cycloaliphatic aliphatic modified amines, and mixtures thereof. Non-limiting examples include polyetheramines, aliphatic amines, modified and unmodified cycloaliphatic amines, polyamides, and the like.

In certain embodiments, the curing agent comprises at least one of a cycloaliphatic amine, a tertiary amine, a tertiary aromatic amine, an aromatic amine, a phenalkamine, or a primary amine. Suitable compounds may have additional amine groups different from tertiary amine groups, such as primary amine groups and/or secondary amine groups. Moreover, suitable compounds can be aromatic, aliphatic, or a combination of both. In many embodiments, the curing agent is a tertiary aromatic amine. In specific embodiments, the tertiary aromatic amine is 2,4,6-tris(dimethylaminomethyl)phenol. In other specific embodiments, the curing agent is dimethylamino(methyl)phenol. In these embodiments, the curing agent can comprise ortho-isomers of dimethylamino(methyl)phenol, para-isomers of dimethylamino(methyl)phenol, or combinations thereof.

In yet other specific embodiments, the curing agent is 1,3-Bis[3-(dimethylamino)propyl]urea. In yet other specific embodiments, the curing agent comprises a diamine, such as 4,4-diaminodicyclohexylmethane (which may be referred to in the art as "PACM"). In yet other specific embodiments, the curing agent comprises dimethylbenzylamine (or "BDMA") and/or 2,4,6-tri(dimethylaminomethyl) phenol. In yet other specific embodiments, the curing agent comprises tetraethylenepentamine (or "TEPA").

It is to be appreciated that the curing agent is different from the binder, despite the possibility of both the binder and curing agent having amine functional groups. Specific examples of suitable curing agents include those commercially available from Prox-Chem America, Inc. of Londonderry, NH, under the trademark ACTIRON^{®}, such as ACTIRON^{®} NX-3. Other specific examples of suitable curing agents include those commercially available from BASF Corporation under the trademark VERSAMINE^{®}, such as VERSAMINE^{®} EH 30 and VERSAMINE^{®} EH 50. Yet other specific examples of suitable curing agents include those commercially available from Air Products under the trademark ANCAMINE^{®}, including ANCAMINE^{®} K54 and ANCAMINE^{®} 1110. Yet other specific examples of suitable curing agents include those commercially available from Elé Corporation under the trademark PEL-CAT, including PEL-CAT 9667. Yet other specific examples of suitable curing agents include those commercially available from Cardolite Corporation under the trademark CARDOLITE^{®}, including CARDOLITE^{®} NX-5454. Mixtures of curing agents may be used in the composition.

The curing agent can be present in the composition in various amounts. In certain embodiments, the curing agent is present in an amount of no greater than about 60, no greater than about 50, no greater than about 40, no greater than about 30, no greater than about 25, no greater than about 20, or no greater than about 15, alternatively of from about 1 to about 30, about 1 to about 25, about 1 to about 20, about 5 to about 20, about 5 to about 15, about 7 to about 12, or about 12, part(s) by weight, each based on 100 parts by weight of the composition.

### Microencapsulated Epoxy Resin

Various types of epoxy resins can be utilized in the composition. Typically, the epoxy resin is multifunctional, i.e., has two or more epoxide functional groups. In various embodiments, the epoxy resin has an average functionality of from about 2 to about 3, about 2.2 to about 2.8, about 2.4 to about 2.6, or about 2.5. In certain embodiments, the epoxy resin comprises at least one of a bisphenol A epoxy resin, a bisphenol F epoxy resin, a novolac epoxy resin, an aliphatic epoxy resin, or a glycidyl amine epoxy resin. In many embodiments, the epoxy resin comprises at least one of a bisphenol F epoxy resin or a novolac epoxy resin. In specific embodiments, the epoxy resin comprises a bisphenol F epoxy resin. In other specific embodiments, the epoxy resin comprises a novolac epoxy resin.

The epoxy resin can be of various molecular weights. In various embodiments, the epoxy resin has a weight per epoxide of from about 150 to about 200, about 160 to about 195, or about 165 to about 195, g/eq. In certain embodiments, the epoxy resin has a weight per epoxide of from about 165 to about 185, or about 170 to about 180, alternatively of from about 175 to about 200, or about 180 to about 195, g/eq.

Specific examples of suitable bisphenol F epoxy resins include those commercially available from Huntsman Advanced Materials of East Lansing, MI, under the trademark ARALDITE^{®}, such as ARALDITE^{®} GY-282. Specific examples of suitable novolac epoxy resins include those commercially available from Momentive Specialty Chemicals of Waterford, NY, under the trademark EPON^{™}, such as EPON^{™} 160 and EPON^{™} 815C. Mixtures of epoxy resins may be used in the composition.

The epoxy resin is encapsulated, more typically microencapsulated. Said another way, the epoxy resin is generally contained in capsules having an average diameter in the micron scale. Encapsulation of the epoxy resin is useful to maintain separation of the epoxy resin from the curing agent. The microencapsulation can be such that, upon installation of a fastener coated with the composition disclosed herein, the installation action, for example threading or press fitting the fastener into place, exerts sufficient force and/or pressure to rupture the microcapsules, resulting in the components inside the microcapsules being expelled therefrom, and no longer isolated in the microcapsules. The subsequent exposure of the previously isolated components starts activation of the cure process. In such instances, curing results in both thread-locking and sealing functionality. In many instances, both thread-locking and sealing functionality is obtained within about 24 hours or less after installation.

The epoxy resin can be encapsulated by various methods in the art and this disclosure is not limited to a particular one. In certain embodiments, the epoxy resin is encapsulated via *in-situ* polymerization and/or via deposition of a shell material to the surface of the epoxy resin within an aqueous emulsion. Reaction conditions for encapsulation are understood by those of ordinary skill in the art or can be determined via routine experimentation.

The shell material may be of various chemistries. In certain embodiments, the shell material comprises formaldehyde-urea, formaldehyde-melamine, formaldehyde-resorcinol, or combinations thereof. In many embodiments, the shell material comprises a melamine and/or resorcinol modified formaldehyde-urea resin. It is thought that melamine and resorcinol modifications generally increase cross-link density of the shell material and provide increased stability in aqueous applications.

The amount of epoxy resin within the microcapsules can vary. In certain embodiments, the epoxy resin is present in an amount of from about 10 to about 90, about 20 to about 85, about 30 to about 80, about 45 to about 75, or about 50 to about 70, parts by weight, each based on 100 parts by weight of the encapsulated epoxy resin. In these embodiments, the remaining parts by weight of the encapsulated epoxy resin, is predominantly or entirely shell material.

The encapsulated epoxy resin can be present in the composition in various amounts. In certain embodiments, the encapsulated epoxy resin is present in an amount of from about 5 to about 95, about 10 to about 90, about 10 to about 85, about 10 to about 80, about 10 to about 70, about 10 to about 60, about 15 to about 55, about 20 to about 50, about 25 to about 50, about 25 to about 45, about 30 to about 45, about 30 to about 40, or about 35, parts by weight, each based on 100 parts by weight of the composition.

### Expansion Agent

Various types of expansion agents can be utilized in the composition. The expansion agent is especially useful for applications where sealing is required such as when a large space is anticipated between the fastener and aperture. Otherwise, expansion can assist in locking the fastener in place during and after cure of the composition, e.g. by increasing the surface for which the adhesive can adhere. Expansion includes, but is not limited to, foaming. Expansion can occur in one, two, or three directions or dimensions.

In various embodiments, the expansion agent comprises a blowing agent which causes the coating or composition to expand upon installation within an aperture, e.g. of a work piece. In turn, this seals or otherwise fills the gaps between certain threads of the fastener or plug and the aperture to provide a second functionality, such as sealing and/or expanding functionality. In general, the expanded network introduced between the fastener and aperture wall maximizes contact surface area, creates internal pressure to "lock in and/or anchor" the fastener, and provides a dampening barrier to dissipate the transfer of shock force from the fastener (e.g. an anchor or a screw) to the aperture interface.

Specific examples of expansion agents suitable for the composition include those that release gasses (or a liquid such as water) upon the application of heat. In other words, the composition can include an additive that itself acts as or provides a physical blowing agent. Specific examples thereof include azocarbonamides and its activated forms, N,N'-dinitrosopentamethyenetetramine, sulfonyl hydrazides, p-toluenesulfonyl semicarbazide, and 5-phenyltetrazole. Alternatively, the expansion agent may comprise an encapsulated hydrocarbon, e.g. encapsulated butane or propone. In these embodiments, the encapsulated hydrocarbon includes a shell wall which softens or melts at elevated temperatures, resulting in the release of the hydrocarbon in a gaseous form. Alternatively still, the expansion agent may comprise metal hydroxide or other hydrated material, such as magnesium hydroxide, aluminum trihydroxide, alumina trihydrate, sodium sulfate decahydrate, magnesium sulfate heptahydrate, magnesium chloride hexahydrate, etc. Physical blowing agents are useful for expanding the composition during cure such that the resulting adhesive better locks a coated fastener into place by expanding onto/into opposing surfaces, e.g. complimentary threaded surfaces.

In various embodiments, the expansion agent can be an alkyl hydrogen silicone fluid. For example, the expansion agent can comprise a microencapsulated methyl hydrogen silicone fluid. Such fluid can react to release hydrogen (H₂) gas when exposed to select acids, bases, or oxidizing agents. In certain embodiments, activation of the methyl hydrogen silicone fluid can occur upon contact with a primary or secondary amine present in the coating. Where an amine is present in the coating composition, it is contemplated that the amine may function as both an activator for the methyl hydrogen silicone fluid and as a curative for the reactive compound, such as an epoxy or an acrylic material.

Optionally, the methyl hydrogen silicone fluid may be dispersed in the composition and the activating agent (acid, base, or oxidizing agent) is microencapsulated. In various embodiments, the methyl hydrogen silicone fluid and the activating agent can be separated spatially by deposition onto the substrate in separate layers or on different areas of the associated fastener such that the materials are physically mixed and activated by installation of the fastener in the aperture or associated end use location.

In various embodiments, the expansion agent is encapsulated, more typically microencapsulated. Said another way, the expansion agent is generally contained in capsules having an average diameter in the micron scale. Encapsulation of the expansion agent is useful to prevent premature expansion of the composition. The microencapsulation can be such that, upon installation of a fastener coated with the composition disclosed herein, the installation action, for example threading or press fitting the fastener into place, exerts sufficient force and/or pressure to rupture the microcapsules, resulting in the components inside the microcapsules being expelled therefrom, and no longer isolated in the microcapsules. The subsequent exposure of the previously isolated components starts the expansion process, generally also during the cure process. In such instances, expansion (and curing) results in both thread-locking and sealing functionality.

In other embodiments, the expansion agent comprises an acid and metal, acid and sodium bicarbonate (and/or other gas evolving acid-base reactions), and/or an encapsulated isocyanate.

The expansion agent can be present in the composition in various amounts. In various embodiments, the expansion agent is present in an amount sufficient to generate gas in a manner and rate sufficient to be entrained in the polymeric material during crosslinking reaction. Entrainment of a gas is not required.

In certain embodiments, the expansion agent is present in an amount of from about 0.5 to about 50, about 1 to about 45, about 1 to about 40, about 1 to about 30, about 1 to about 25, about 1 to about 20, about 1 to about 15, about 5 to about 15, about 7 to about 13, about 8 to about 12, or about 11, part(s) by weight, each based on 100 parts by weight of the composition. Too little of the expansion agent may not provide sufficient adhesion properties for a desired application, whereas too much of the expansion agent may cause weakening of the resulting adhesive, e.g. by making it friable.

The microencapsulated epoxy resin and the expansion agent are present in the composition in a weight ratio of from about 15:1 to about 1:1, or about 4:1 to about 2:1. Without being bound to any particular theory, it is believed that the aforementioned ratios impart the composition with excellent expansion and cure properties.

### Binder

Various types of binders can be utilized in the composition. In various embodiments, the binder is a resin that can be present at a molecular weight between oligomeric to medium molecular weight thermoplastic resin. In various embodiments, the weight average molecular weight of the binder can be about 2,000 to about 2,000,000. Suitable polymeric binders include, but are not limited to, polyvinyl acetals such as polyvinyl butyral (PVB), acrylic copolymers and terpolymers, thermoplastic polyurethanes, thermoplastic elastomer, polyvinyl alcohol (PVOH), acrylic or vinyl polymer or copolymer dispersions.

Non-limiting examples of suitable acrylic copolymers and/or terpolymers include, but are not limited to, various substituted and unsubstituted methacrylic copolymeric and/or terpolymeric resins. Non-limiting examples of substituent groups can include C-1 to C-18 branched or unbranched alkyl groups. Optional polymeric binders can include monomers such as methyl acrylate and/or methyl methacrylate, where a methyl substituent can be a C-1 alkyl group. The acrylic resin materials can be monosubstituted or disubstituted or polysubstituted. The polymeric binder material can contain reactive functional groups that provide a dual functionality by undergoing at least some three-dimensional cross-linking. Non-limiting examples of suitable functional groups include amine groups, hydroxyl groups, and carboxyl groups. The reactive functionality, if present, is capable of cross-linking into a three-dimensional network of bonds or can function as a curing agent.

Polymeric binders in the form of acrylic copolymers and/or terpolymers can be produced by any suitable means. It is contemplated that the material used can be the result of *in-situ* polymerization of copolymers and various monomeric units including, but not limited to, short chain acrylates and methacrylates including, but not limited to, methyl, polymethyl, ethyl, polyethyl butyl and/or polybutyl acrylates and/or methacrylates. Suitable (meth)acrylate resins include those having a weight average molecular weight between about 50,000 and 250,000 and an intrinsic viscosity of from about 0.1 to about 0.4. Non-limiting examples of suitable methacrylate resin copolymers include various resins commercially available from Dianal America of Pasadena, Texas, U.S.A. under the trade name DIANAL. A non-limiting example of such is DIANAL BR-115 resin which is thought to be a poly-isobutyl methacrylate resin. Other examples of suitable methacrylate resins include polybutyl methacrylates such as those commercially available from Lucite International, of Hampshire, United Kingdom, under the trade name ELVACITE, such as ELVACITE 2014 and ELVACITE 2550. Also contemplated is the use of various methacrylate/butyl acrylate copolymers copolymerized with acrylic and/or methacrylic acid.

Polymeric binders may also be selected from polyethylene oxides or polyethylene imine resins, epoxy adducts, hydrocarbon resins, or synthetic hydrocarbon waxes. Natural or synthetic rubbers or thermoplastic elastomers may also be used.

Suitable polyvinyl acetals for the polymeric binders are those formed by the acid catalyzed acetalization of poly(vinyl acetate). In certain embodiments, polyvinyl butyral can be used. It is contemplated that the polyvinyl butyrals having a hydroxyl content expressed as residual poly(vinyl alcohol) content of from about 10% to about 15% as determined by IR analysis by test method WB-03-01-55; and an average molecular weight between about 30,000 and about 80,000 can be used. Non-limiting examples of suitable materials include BUTVAR resins, such as BUTVAR B-79 resin.

The binder can also include various engineered plastics such as polyimide resins, polyetherimide resins, polyamideimide resins, and the like. Suitable materials will generally have a number average molecular weight between about 500,000 and 800,000.

In various embodiments, the binder comprises an acrylic resin, and in further embodiments an acrylic bead resin. In these embodiments, the acrylic resin may be prepared from a reaction mixture including, but not limited to, (meth)acrylate monomers such as methyl methacrylate (MMA), ethyl acrylate (EA), butyl acrylate (BA), butyl methacrylate (BMA), n-butyl methacrylate (n-BMA), isobutylmethacrylate (IBMA), polyethylmethacrylate (PEMA), or combinations thereof. Exemplary acrylic resins include those commercially available from Rohm and Haas, Co., of Philadelphia, PA under the trade designation PARALOID, such as PARALOID B-48N; and from Ineos Acrylics, of Cordova, TN under the trade designation ELVACITE resins. Other suitable acrylic resins include those from S.C. Johnson, of Racine, WI under the trade designation JONCRYL acrylics.

It is to be appreciated that the reaction mixture for preparing the acrylic resin may include other olefinically unsaturated monomers including monomers which may contain, apart from an olefinic double bond, further functional groups or may contain, apart from an olefinic double bond, no further functional groups. Non-limiting examples of other suitable olefinically unsaturated monomers include other olefinically unsaturated monomers, such as alkyl (meth)acrylates, cycloaliphatic (meth)acrylates and aromatic (meth)acrylates. Typical alkyl (meth)acrylates have from 1 to 18 carbons in the alkyl group such as methyl (meth)acrylate, ethyl (meth)acrylate, propyl (meth)acrylate, isopropyl (meth)acrylate, n-butyl (meth)acrylate, isobutyl (meth)acrylate, t-butyl (meth)acrylate, pentyl (meth)acrylate, hexyl(meth) acrylate, 2-ethyl hexyl (meth)acrylate, nonyl (meth)acrylate, decyl (meth)acrylate, lauryl (meth)acrylate, and the like. Cycloaliphatic (meth)acrylates can be used such as cyclohexylacrylate, trimethylcyclohexyl (meth)acrylate, t-butyl cyclohexyl (meth)acrylate, and the like. Aromatic (meth)acrylates such as benzyl (meth)acrylate, phenyl (meth)acrylate, and phenoxy ethyl (meth)acrylic can also be used.

Non-limiting examples of suitable acid functional olefinically unsaturated monomers include olefinically unsaturated carboxylic acids, phosphonic acids, phosphoric acids, and sulfonic acids. Non-limiting examples of suitable olefinically unsaturated carboxylic acids are acrylic acid, methacrylic acid, crotonic acid and isocrotonic acid. Non-limiting examples of suitable olefinically unsaturated phosphoric, phosphonic and sulfonic acids are styrene sulfonic acid, acrylamido methyl propane sulfonic acid, methacryloxyethyl phosphate vinyl phosphonic acid and the like. In certain embodiments, the acid functional olefinically unsaturated monomer includes acrylic acid, methacrylic acid, or a combination thereof.

Non-limiting examples of suitable hydroxy functional olefinically unsaturated monomers include hydroxyalkyl esters of alpha, beta-olefinically unsaturated monocarboxylic acids having primary or secondary hydroxyl groups. Further non-limiting examples include the hydroxyalkyl esters of acrylic acid, methacrylic acid, crotonic acid and/or itaconic acid. The hydroxyalkyl radicals may contain, for example, 1 to 10 carbon atoms or optionally 2 to 6 carbon atoms. Non-limiting examples of suitable hydroxyalkyl esters of alpha, beta-olefinically unsaturated monocarboxylic acids having primary hydroxyl groups are 2-hydroxyethyl(meth)acrylate, 3-hydroxypropyl(meth)acrylate, 4-hydroxybutyl(meth)acrylate, 5-hydroxyamyl(meth)acrylate, 6-hydroxyhexyl(meth)acrylate, or combinations thereof. Non-limiting examples of suitable hydroxyalkyl esters having secondary hydroxyl groups include 2-hydroxypropyl(meth)acrylate, 2-hydroxybutyl(meth)acrylate, 3-hydroxybutyl(meth)acrylate, or combinations thereof. Further hydroxy functional olefinically unsaturated monomers which may be used are reaction products of alpha, beta-unsaturated monocarboxylic acids with glycidyl esters of saturated monocarboxylic acids branched in the alpha position, e.g., with glycidyl esters of saturated alpha-alkylalkane monocarboxylic acids or alpha, alpha'-dialkylalkane monocarboxylic acids. In certain embodiments, these are the reaction products of (meth)acrylic acid with glycidyl esters of saturated alpha, alpha'-dialkylalkane monocarboxylic acids having from 7 to 13 carbon atoms in the molecule or optionally from 9 to 11 carbon atoms in the molecule. Other hydroxy-functional unsaturated monomers are polyethylene oxide and/or polypropylene oxide modified (meth)acrylates. Other polymerizable monomers can also be used for preparing the acrylic resin, such as styrene, a-methyl styrene, vinyl acetate, vinyl butyrate, vinyl pyrrolidone, and the like.

In certain embodiments, the acrylic resin includes a polymer of n-butyl methacrylate. The acrylic resin may be formed from a reaction mixture including n-butyl methacrylate. In various embodiments, the acrylic resin includes a copolymer of methyl methacrylate and n-butyl methacrylate. The acrylic resin may be formed from a reaction mixture including methyl methacrylate and n-butyl methacrylate.

In certain embodiments, the acrylic resin includes a polymer of methyl methacrylate. The acrylic resin may be formed from a reaction mixture including methyl methacrylate. In various embodiments, the acrylic resin includes a copolymer of methyl methacrylate and butyl acrylate. The acrylic resin may be formed from a reaction mixture including methyl methacrylate and butyl acrylate.

In various embodiments, including those where the composition is UV-curable, the binder can comprise one or more acrylic monomers and/or oligomers. Examples include various (meth)acrylate functional oligomers, (meth)acrylate functional monomers, and/or blends of the same, e.g. in a microencapsulated state. Specific examples of components include those commercially available from Dymax Corporation under the trade name BOMAR, such as BOMAR BR-7432GB, which is difunctional oligomer, specifically an aliphatic polyester urethane diacrylate; as well as from Sartomer Americas such as SR-348, which is a low volatility monomer, specifically an alkoxylated (ethoxylated) bisphenol A dimethyacrylate.

The binder can be present in the composition in various amounts. In certain embodiments, the binder is present in an amount of from about 0.5 to about 50, about 1 to about 40, about 1 to about 30, about 1 to about 25, about 1 to about 20, about 1 to about 15, about 1 to about 10, about 2 to about 8, about 3 to about 7, or about 5, part(s) by weight, each based on 100 part(s) by weight of the composition.

### Photoinitiator

In various instances, especially those where the composition is UV-curable, the composition can include one or more photoinitiators (or photo-initiators or simply "initiators"). Various types of photoinitiators can be utilized in the composition.

Initiators useful in preparing the composition are initiators that, on exposure to heat or light, generate free-radicals which initiate (co)polymerization of the monomer and/or oligomer mixture of the binder component.

Free-radical generating photoinitiators are understood in the art and include initiators such as IRGACURE 651, available from BASF, of Tarrytown, N.Y., which is 2,2-dimethoxy-2-phenylacetophenone. Also useful is DAROCUR 1173, available from BASF, Mount Olive, N.J., which is 2-hydroxy-2-methyl-1-phenyl-propan-1-one or DAROCUR 4265 which is a blend of 50% DAROCUR 1173 and 50% 2,4,6-trimethylbenzoyl-diphenyl-phosphine oxide (TPO).

Further useful photoinitiators are those available under the trade designations IRGACURE and DAROCUR from BASF Corp., of Tarrytown, N.Y. and include 2,2-dimethoxy-1,2-diphenylethan-1-one (IRGACURE 651), bis(2,4,6-trimethylbenzoyl)phenylphosphineoxide (IRGACURE 819), 1-[4-(2-hydroxyethoxy)phenyl]-2-hydroxy-2-methyl-1-propane-1-one (IRGACURE 2959), 2-benzyl-2-dimethylamino-1-(4-morpholinophenyl)butanone (IRGACURE 369), and 2-methyl-1-[4-(methylthio)phenyl]-2-morpholinopropan-1-one (IRGACURE 907).

Photoinitiators can also include benzoin, benzoin alkyl ethers, ketones, phenones, and the like. For example, the composition may comprise ethyl-2,4,6-trimethylbenzoylphenylphosphinate available as LUCIRIN TPO-L from BASF Corp., 1-hydroxycyclohexyl phenyl ketone available as IRGACURE 184 from BASF, or 2,4,6-trimethylbenzoyldiphenylphosphine oxide (TPO), available as LUCIRIN TPO from BASF.

Thermally activated initiators may also be used by themselves or in combination with these photoinitiators. Examples of thermal initiators include organic peroxides, such as benzoylperoxide, and azo compounds, such azo-bis-isobutyronitrile. These thermal initiators would be used in a similar concentration range as the photoinitiators.

The photoinitiator can be present in the composition in various amounts. In certain embodiments, the photoinitiator is present in an amount of from about 0.01 to about 10, about 0.05 to about 7, about 0.05 to about 5, about 1 to about 5, about 1 to about 4, about 1 to about 3, or about 1 to about 2, part(s) by weight, each based on 100 parts by weight of the composition.

### Solvent

Various types of solvents can be utilized in the composition.

In various embodiments, the solvent comprises an organic solvent. However, it is to be appreciated that the solvent component may include any other solvent, including water, known for solvating solutes so long as the solvent is compatible with the components of the composition. In certain embodiments, the composition is substantially free or free of water. In these embodiments, the composition may be referred to as an anhydrous composition. However, one of skill in the art will appreciate that certain components of the composition may have a moisture content that can fluctuate, such as those materials considered to be hygroscopic.

Examples of suitable organic solvents for the solvent component include, but are not limited to, toluene, xylene, butyl acetate, acetone, methyl isobutyl ketone, methyl ethyl ketone, ethyl amyl ketone, methanol, isopropanol, butanol, hexane, acetone, ethylene glycol, monoethyl ether, propylene glycol methyl ether, VM and P naptha, mineral spirits, heptane and other aliphatic, cycloaliphatic, aromatic hydrocarbons, aromatic petroleum distillates, esters, ethers and ketone, or combinations thereof. In certain embodiments, the solvent component includes methyl ethyl ketone (MEK), toluene, propylene glycol methyl ether, or combinations thereof. In some embodiments, the solvent comprises a carbonate ester, such as dimethyl carbonate (DMC). Blends of solvents (or solvents and co-solvents) can be utilized.

The solvent component may be present in the composition in various amounts. One of skill in the art appreciates that the amount of solvent can be varied to change the viscosity of the composition, which can be useful for storage, transport, application techniques, etc. of the composition.

In certain embodiments, the solvent is present in an amount of from about 1 to about 60, about 5 to about 55, about 10 to about 55, about 15 to about 55, about 20 to about 50, about 25 to about 45, about 30 to about 40, or about 36, part(s) by weight, each based on 100 part(s) by weight of the composition.

### Optional Additive(s)

The composition may further include a variety of additives understood in the art, including, but not limited to, a plasticizer component, a surfactant component, an anti-settling component, a colorant component, a filler component, a viscosity modifier, a wax, a filler, an impact modifier, or combinations thereof.

Other components that may be present in the composition include minor amounts of antioxidants, inhibitors, defoamers, dispersing aids, heat stabilizers, UV stabilizers, and the like. In various embodiments, one or more of such compounds are individually present in the composition in an amount less than about 5 weight %.

Suitable additives are commercially available from a large number of suppliers. Some of these additives are described in greater detail below.

Additives are useful for modifying at least one property (e.g. a physical property) thereof or of the adhesive formed by curing the composition. The property may be, for example, installation torque, flow properties, coefficient of friction, viscosity, hardness, etc.

In various embodiments, the composition includes a colorant comprising one or more pigments, dyes, or combinations thereof to achieve a coating color. Coating colors are sometimes used to indicate a particular fastener size and/or to indicate the function or functions of the coating. Suitable colorants will generally be those that are soluble or dispersible in the solvent system of the coating and be compatible with the chemistry of the coating.

The colorant component may include a colorant including, but not limited to, one or more pigments, dyes, or combinations thereof to achieve a coating color. Composition colors are sometimes used to indicate the function of the composition or the resulting layer. Suitable colorants will generally be those that are soluble or dispersible in the solvent component of the composition and be compatible with the chemistry of the composition.

Suitable pigments and dyes are commercially available from a variety of suppliers. One of ordinary skill in the art can readily select a suitable pigment (or pigments) and/or a suitable dye (or dyes) based on want or need. Pigments and dyes are useful for imparting the composition with color. The pigment and/or dye can be of various colors.

Specific examples of suitable pigments include those commercially available from BASF Corporation under the trademark MICROLITH^{®}, from Day-Glo Color Corp., and from Lansco Colors. Specific examples of suitable dyes include those commercially available from Pylam Products Company, Inc. Some fillers, if present, may also present a color for the composition, e.g. TiO₂. Mixtures of pigments and/or dyes may be used in the composition.

If utilized, the colorant may be present in the composition in various amounts. In certain embodiments, the colorant is present in the composition in an amount of from about 0.01 to about 5, about 0.01 to about 3, or about 0.05 to about 1, part(s) by weight based on 100 parts by weight of the composition.

In various embodiments, the composition can include one or more plasticizers used to modify various characteristics including, but not limited to, coating hardness, adding hydrophobicity, and/or lowering breakaway torque, and the like. Suitable plasticizers include, but are not limited to, phthalates, trimellitates, benzoates, adipates, sebacates, maleates, citrates, epoxidized vegetable oils, sulfonamides, organophosphates, glycols/polyethers, polymeric plasticizers and polybutenes.

If utilized, the plasticizer may be present in the composition in various amounts. In certain embodiments, the plasticizer is present in the composition in an amount of from about 0.01 to about 5, about 0.01 to about 3, or about 0.05 to about 1, part(s) by weight based on 100 parts by weight of the composition.

In various embodiments, the composition can include a surfactant component. The surfactant component may include anionic surfactants, non-ionic surfactants, cationic surfactants, Zwitterionic surfactants, or combinations thereof. However, it is to be appreciated that the surfactant component may include any other surfactant understood in the art so long as the surfactant is compatible with the components of the composition.

Examples of suitable anionic surfactants include, but are not limited to, fatty alcohol sulphates, alkylphenol sulphates, fatty alcohol ether sulphates, fatty alcohol ether sulphates, alkylphenol ether sulphates, alkylbenzene sulphonic acid, alkyl ether carboxylic acid and salts thereof, alkyl sulphosuccinates, alkyl sulphosuccinamates, phosphate esters, α-olefin sulphonates, or combinations thereof. Examples of suitable non-ionic surfactants include, but are not limited to, alcohol ethoxylates, alkylphenol ethoxylates, polyethylene oxide/polyethylene oxide block copolymers, polyvinyl alcohol, polyvinyl pyrrolidone, sorbitan fatty acid esters, sorbitan ester ethoxylates, or combinations thereof. Examples of suitable cationic surfactants includes, but are not limited to, alkyl dimethylamines, quaternary ammonium compounds, or combinations thereof. In certain embodiments, the surfactant component includes a nonionic surfactant. The nonionic surfactant may include an acetylene glycol surfactant, 2-ethylhexanol, or a combination thereof.

If utilized, the surfactant may be present in the composition in various amounts. In certain embodiments, the surfactant is present in the composition in an amount of from about 0.01 to about 5, about 0.01 to about 3, or about 0.05 to about 1, part(s) by weight based on 100 parts by weight of the composition.

In various embodiments, the composition can include a viscosity modifier. Suitable viscosity modifiers are commercially available from a variety of suppliers. One of ordinary skill in the art can readily select a suitable viscosity modifier (or viscosity modifiers) based on want or need. Viscosity modifiers are useful for adjusting viscosity of the composition. Moreover, the viscosity modifier can prevent settling of the encapsulated epoxy resin. Thus, the composition can include an anti-settling component. Thus, one of skill in the art appreciates that certain terminology may be interchangeable for certain additives.

In certain embodiments, the anti-settling component (or aid) comprises a silica. Examples of suitable silicas include fumed silica, such as hydrophilic fumed silica. Precipitated silica and/or wax treated silica can also be utilized.

Specific examples of suitable viscosity modifiers include those commercially available from Cabot Corporation under the trademark CAB-O-SIL^{®}, such as CAB-O-SIL^{®} TS720, from W.R. Grace & Co. under the trademark SYLOID^{®}, such as SYLOID^{®} 169, from PPG Industries under the trademark HI-SIL^{®}, and from Evonik Industries of Essen, Germany, under the trademark AEROSIL^{®}. Mixtures of viscosity modifiers/anti-settling aids may be used in the composition.

If utilized, the anti-settling aid may be present in the composition in various amounts. In certain embodiments, the anti-settling aid is present in the composition in an amount of from about 0.01 to about 5, about 0.01 to about 3, or about 0.05 to about 1, part(s) by weight based on 100 parts by weight of the composition.

In various embodiments, the composition can include a filler. Fillers may be used for various objectives including, for example, cost control, rheology control, lubricity modification, as well as to prevent seizing or galling. Fillers and other additives may also be used to assist with the rupture of microcapsules.

Suitable fillers for the composition include extending fillers and/or reinforcing fillers. Fibrous materials or fibers are also within the scope of such fillers. Fillers may have a variety of particle sizes, e.g. from dust-like particles to coarse-grain particles to elongated fibers. The filler may be organic and/or inorganic. Specific examples of fillers suitable for the composition in particle form include clays, such as kaolin; chalk; wollastonite; talcum powder; calcium carbonate; silicates; silica; ferrites; titanium dioxide; zinc oxide; graphite; glass particles, e.g. glass beads; and nanoscale fillers, such as carbon nanotubes, carbon black, nanoscale and other phyllosilicates, nanoscale aluminum oxide ("Al₂O₃"), nanoscale titanium dioxide ("TiO₂"), graphene, and nanoscale silicon dioxide ("SiO₂"). Nanoscale fillers typically have at least one dimension of less than 100 nanometers (nm). Specific examples of fillers suitable for the composition in fibrous form include boron fibers; glass fibers; carbon fibers; silica fibers; ceramic fibers; basalt fibers; aramid fibers; polyester fibers; nylon fibers; polyethylene fibers; and natural fibers, such as wood fibers, flax fibers, hemp fibers, and sisal fibers. Mixtures of filers may be used in the composition.

If utilized, the filler may be present in the composition in various amounts. In certain embodiments, the filler is present in the composition in an amount of from about 0.01 to about 10, about 0.01 to about 5, about 0.01 to about 3, or about 0.05 to about 1, part(s) by weight based on 100 parts by weight of the composition.

In various embodiments, the composition, either by itself or disposed on the fastener, can include a lubricant such as wax, oil, molybdenum, or other lubricating compounds. The lubricant can impart yet another functionality to the fastener, namely, lubrication. Such lubrication can be helpful when initially installing a fastener such as a self-tapping fastener. It is thought that the lubrication advantage combined with the expansion and anchoring behavior of the composition can generate a unique self-tapping/anchoring fastener (e.g. a screw) in many rigid and semi-rigid substrates. In some cases, a pilot hole may be used to aid in the self-tapping feature of the fastener.

In various embodiments, the coating composition can also include various additional components added to impart or improve certain specific attributes or characteristics. These can include various lubricity enhancers as well as materials that can enhance water repellency. Such materials can include, but need not be limited to, waxes such as paraffin, polyethylene, polypropylene, carnauba, polytetrafluoroethylene or any combination of the aforementioned materials. If used, the wax or combination of waxes can be added as a small particle size component, for example less than 100 microns, less than 50 microns, or less than 10 microns.

If utilized, the wax may be present in the composition in various amounts. In certain embodiments, the wax is present in the composition in an amount of from about 0.01 to about 5, about 0.01 to about 3, or about 0.05 to about 1, part(s) by weight based on 100 parts by weight of the composition.

### Method of Manufacture

The composition can be formed using conventional methods understood in the art. The composition is not limited to a particular order or addition of the components, although liquid components are generally utilized first followed by dry or powder components.

Low shear should be used to prevent or lessen rupture of encapsulated components. After mixing and formation is complete, the resulting composition can be transferred to a storage vessel or used shortly thereafter, e.g. to form coated fasteners.

### Article, Method of Forming the Article, and Method of Using the Article

The article comprises a substrate having a surface. The adhesive composition is disposed on the surface. As described above, the article is typically a fastener. As such, the substrate surface typically comprises a threaded surface. The adhesive composition is prepared from the composition.

### Fastener

The fastener comprises a threaded surface. The fastener further comprises the composition at least partially disposed on the threaded surface. The fastener, while including the composition (or the resulting adhesive) disposed thereon, is generally referred to hereinafter as the "coated fastener." Moreover, the term "coated," is not to be construed as limiting the coated fastener in any way, such as by limiting the coated fastener to a particular configuration or method of manufacture. The fastener, while free of the composition (or the resulting adhesive), is generally referred to hereinafter as the "fastener."

By "at least partially disposed," it is generally meant that the composition is disposed on a portion, a majority, or an entirety, of the threaded surface of the coated fastener. Typically, the composition is disposed about the threaded surface of the fastener to coat the threaded surface thereof, although partial coating of the threaded surface may be carried out, e.g. circumferentially and/or lengthwise. The composition may also be present on nonthreaded portions of the coated fastener, e.g. on an adjacent smooth surface (or surfaces).

The present invention is not limited to a particular type of fastener. In general, the fastener is a conventional fastener understood in the art. Suitable fasteners include, but are not limited to, anchors, bolts, nuts, screws, studs, stand-offs, plugs/caps, and combinations thereof. With anchors, bolts, screws, studs, and stand-offs, the fastener will generally have an elongated body which includes the threaded surface, and optionally, an adjacent smooth surface (or surfaces). The fastener may be of various types, drive types, head styles (or headless), diameters, and lengths. Combinations of different coated (or uncoated) fasteners may be utilized for a given end application, e.g. bolts and nuts, bolts and studs, bolts and screws, etc., or the coated fastener may be utilized alone, e.g. a coated bolt, a coated nut, etc.

The threaded surface may be external (i.e., male) or internal (i.e., female), and can be of various types, configurations, or patterns. As such, the threaded surface is not limited to, for example, a particular major diameter, minor diameter, pitch diameter, helix angle, thread angle, thread count, thread pitch, or number of crests/roots.

Average thickness of the composition on the coated fastener may be uniform or may vary. Typically, the composition fills at least a portion, a majority, or an entirety of the threaded surface roots. The composition may also cover at least a portion, a majority, or an entirety of the threaded surface crests. The total amount of composition utilized to coat the fastener is not limited and can be readily determined via routine experimentation for a given end application or need.

The fastener may be formed from conventional materials including, but not limited to, carbon steel, alloy steel, stainless steel ("SS"), plain steel ("PS"), iron, brass, bronze, titanium, aluminum, magnesium alloy, and combinations thereof. In general, the fastener is formed from a metal or metal alloy to provide strength and rigidity.

The fastener may include various types of conventional plating and/or coating materials, including, but not limited to, zinc plating (e.g. galvanization, zinc flakes, etc.), chromium (or chrome) plating, nickel plating, cadmium plating, aluminum plating, magnesium coating, phosphate (e.g. dry phosphate) coating, and combinations thereof. Alternatively, the fastener may be a "virgin" or "bright" fastener (i.e., it may lack plating/coating). However, the fastener typically includes a conventional plating and/or coating material to prevent corrosion and/or aid in installation. The adhesive composition is generally disposed on or adjacent such plating and/or coating, which is typically already present on the fastener. Suitable fasteners for making the coated fasteners of the present invention are commercially available from a large number of suppliers.

The composition on the coated fastener is generally considered to be "dry," i.e., it is dry to the touch such that physical transfer from the coated surface is little to none. That being said, the adhesive composition on the coated fastener generally still has a moisture (or water) content, which may fluctuate based on the components thereof and ambient conditions (e.g. temperature and relative humidity). In various embodiments, the composition has a moisture content of less than about 20, less than about 15, less than about 10, less than about 5, less than about 1, or approaching 0, part(s) by weight, based on 100 parts by weight of the composition. Too much moisture (or solvent) may allow the composition to slough off the coated fastener, whereas too little moisture, e.g. no moisture, may make the composition brittle and prone to flaking off the coated fastener.

### Method of Manufacture

The coated fastener can be made utilizing conventional techniques understood in the coated fastener art. In an exemplary method of manufacture, the method comprises the steps of providing the fastener and providing the composition. The method further comprises the step of applying the composition to at least a portion of the threaded surface of the fastener to form a coated fastener. Optionally, the method further comprises the steps of providing and applying a second composition to at least a portion of the composition.

The composition is typically liquid so that it may be applied on the threaded surface of the fastener via various wet coating techniques, such as dip coating, spin coating, flow coating, flood coating, spray coating, roll coating, gravure coating, sputtering, slot coating, inkjet printing, and combinations thereof. Typically, dip coating, flow coating, or flood coating are utilized. In certain embodiments, the adhesive composition may include various amounts of solvent depending on the desired viscosity associated with a particular application technique, for example.

The composition may be applied immediately prior to use of the coated fastener, e.g. by a customer. Alternatively, the composition may be applied to the threaded surface of the fastener and subsequently shipped or stored as a "pre-applied" composition. In the latter case, the composition is typically dried to remove the solvent prior to shipment, storage, or use. This leaves the remaining components of the composition in place on the threaded surface. One of ordinary skill in the art can readily determine proper drying methodologies and conditions.

For the UV-curable coating compositions, the material is placed on the fastener and subjected to a UV light source. This creates a skin over the material that allows it to be easily packaged.

If desired, an underlying coating may be applied to a portion, a majority, or an entirety of the threaded surface of the fastener prior to applying the composition such that the composition does not directly contact the threaded surface of the coated fastener. Typically, however, the composition is applied directly to the threaded surface of the fastener. Such underlying coatings are typically distinguishable from conventional plating/coating materials present on fasteners.

Alternatively or in addition, one or more compositions or layers may be applied on the composition. For example, the composition may be applied to the threaded surface of the fastener to form a base coat layer, and a second composition may be applied on the base coat layer to form a top coat layer (or overcoat layer). The second composition may be the same as or different from the composition. Typically, the second composition is different from the composition such that a layered structure results. The second composition is typically flowable and may be applied via wet coating techniques, as described above. When the base coat and top coat layers are utilized, the layers are typically applied "wet-on-wet." As used herein, the fastener including at least the composition and optionally the second composition is also referred to as a coated fastener.

The second composition, when different from the composition, may be selected based on desired properties of the coated fastener. For example, the second composition may be utilized to increase a shelf life of the coated fastener, increase durability of the underlying composition (e.g. by encapsulation by the second composition), modify a coefficient of friction, etc. For example, the second composition may promote adhesion to certain fastener types and/or to certain substrates.

Use of the second composition may be useful for assisting the composition in wetting out the threaded surface of the fastener during application, e.g. by further wetting out the composition and thus the threaded surface. This is especially true with threaded surfaces having small thread pitches. Moreover, the second composition may prevent bridging of the composition during application and/or cure, where the composition may separate from (or be spaced from) roots of the threaded surface and merely sit across crests of the threaded surface, which can decrease adhesion.

In certain embodiments, the second composition comprises a polymer or resin in a carrier vehicle. The polymer or resin is typically organic. The polymer or resin may be curable, i.e., subject to further cross-linking or bonding, or may not further react. For example, the polymer or resin may merely be dispersed in a carrier vehicle such that removal of the carrier vehicle results in a dried polymer or resin (or highly viscous polymer or resin) without the formation of additional crosslink sites. Specific examples of suitable polymers and resins include acrylics, phenolics, polyesters, polyvinylbutyral, phenoxys, solid epoxies, polyureas, cellulosic resins, polyurethanes, polyamides, polyethers, alkyds, silicones, acrylonitriles, etc. In certain embodiments, the overcoat layer is prepared from an acrylic composition.

The carrier vehicle is typically an organic solvent and may be aliphatic and/or aromatic. Specific examples thereof include alcohols, acetone, MEK, toluene, xylene, heptane, hexane, ethers, DMC, etc. The second composition may further comprise any of the additives described above with regard to the composition, as well as, for example, a plasticizer, e.g. tris(2-ethylhexyl) trimellitate (TOTM). Typically, the composition and the second composition may be dried (or cured) via similar mechanisms, e.g. heat, so a single drying step may be utilized.

If utilized, the second composition can be present in various amounts. Typically, the second composition is present in an amount less than that of the composition so as to not impede the composition, e.g. during cure. For example, the second composition may make up about 5 to less than 50, about 10 to about 40, about 15 to about 30, or about 20 to about 25, parts by weight, based on 100 parts by weight of the composition and second composition combined.

The composition, and if present, the second composition, may be dried by heating. The composition typically dries upon exposure to heat, e.g. in an oven or from another heat source. Alternatively, the composition may be dried at room temperature (e.g. air dried at 23±3 °C). Typically, drying is carried out at a temperature of no greater than about 100 °C to dry the composition on the coated fastener. This temperature range can facilitate drying while preventing premature cure or boiling of the composition (which can disrupt the coating layer and thus adhesion).

### Method of Use

The coated fasteners including the composition may be utilized in diverse applications understood in the coated fastener art, e.g. to join various elements or substrates. In an exemplary method of use, the method comprises the steps of providing adjacent elements and providing the coated fastener. The method further comprises the step of disposing the coated fastener adjacent and/or through the adjacent elements. For example, a coated nut would generally be "adjacent," whereas a coated bolt or coated screw would generally be "through."

The adhesive is formed from the composition by curing the composition. The composition is typically curable upon exposure to shear such that the encapsulated epoxy resin ruptures, e.g. when the coated fastener is installed/used. The composition may be cured at room or ambient temperature (e.g. 23±3 °C), although adhesive properties may improve with the addition of heat. The adhesive has excellent physical properties and may be utilized in diverse applications. Specifically, the adhesive has excellent temperature resistance, durability, and adhesiveness to a variety of substrates.

The present invention also provides a substrate including a coated fastener at least partially disposed therein. The coated fastener includes the composition (and optionally the second composition and any other layers desired) in a partially cured or uncured state. Alternatively, the composition may be cured such that the coated fastener is bonded to the substrate via the adhesive formed by curing the composition.

### Assembly

The assembly includes the coated fastener. The composition can be in a pre-cure, curing, or post-cure (i.e., adhesive) state depending on status of the coated fastener with respect to the assembly. For example, if the coated fastener is only partially disposed (e.g. not tightened down), the encapsulated epoxy resin may not have been exposed to sufficient shear to cause rupture. Alternatively, if the coated fastener is fully disposed (e.g. tightened down), the encapsulated epoxy resin has been ruptured to initiate reaction to form the adhesive. After rupture and comingling of the components, the adhesive composition generally expands and cures to form an adhesive.

As understood in the art, coated fasteners may be utilized to join adjacent elements or substrates. To this end, the substrate may comprise two different elements, substrates, or layers, with the coated fastener disposed adjacent and/or through the substrate. Typically, the substrate defines an aperture, and the coated fastener is disposed in the aperture defined by the substrate. Alternatively, the coated fastener may form the aperture *in-situ* while being disposed in the substrate (e.g. in the case of self-tapping screws). The composition is particularly suited for use on bolt-and-nut assemblies or other threaded fasteners.

### Powdered Adhesive Composition

Also described is a powdered adhesive composition. The powdered adhesive composition (or "powder composition") comprises: A) an epoxy curing agent component; B) a microencapsulated epoxy resin component; and C) an expansion agent component. The powder composition may consist essentially of components A) to C) i.e., the powder composition may be substantially to completely free of a (or the) solvent component. The powder composition may be substantially to completely free of a (or the) binder component.

The powdered adhesive composition may be substantially anhydrous and/or substantially free of a solvent component. The powder composition may be free from solvent or water such that it is considered (or approaching) 100% solids.

The phrase "substantially anhydrous" as utilized herein generally means that the powder adhesive includes less than 5, less than 2, less than 1, less than 0.1, or less than 0.01 part(s) by weight water, based on 100 parts by weight of the powder composition. Likewise, the phrase "substantially free" as utilized herein generally means that the powder adhesive includes less than 5, less than 2, less than 1, less than 0.1, or less than 0.01 part(s) by weight, e.g. solvent, based on 100 parts by weight of the powder composition.

Each of components A), B) and C) of the powder composition are as described above for the coating composition. Thus, suitable examples of such components are detailed above and not repeated here for sake of brevity. Component A) may comprise an amine, component B) may comprise a novolac epoxy resin, a bisphenol F epoxy resin, or a combination thereof and component C) may comprise a microencapsulated expansion.

The amount of each of components A), B) and C) of the powder composition are as described above for the coating composition (albeit adjusted or normalized for the lack of solvent). Component A) can be present in an amount of from about 5 to about 35, about 10 to about 30, about 15 to about 25, or about 20, parts by weight based on 100 parts by weight of the powder composition. Component B) can be present in an amount of from about 45 to about 75, about 50 to about 70, about 55 to about 65, or about 60, parts by weight based on 100 parts by weight of the powder composition. Component C) can be present in an amount of from about 1 to about 15, about 2 to about 12, about 3 to about 10, about 5 to about 10, about 6 to about 8, or about 7, part(s) by weight based on 100 parts by weight of the powder composition.

### Anti-Caking Agent

The powder composition may further comprise an anti-caking component. Various types of anti-caking components (or agents) can be utilized. Examples of such components are as described above for the optional viscosity modifiers, anti-settling aids, and/or fillers of the coating composition. Thus, suitable examples of such components are detailed above and not repeated here for sake of brevity. The anti-caking component may comprise precipitated silica.

If utilized, the anti-caking component may be present in the powder composition in various amounts. The anti-caking component may be present in an amount of from about 0.01 to about 25, about 1 to about 20, about 1 to about 15, about 1 to about 10, about 5 to about 10, or about 10, part(s) by weight based on 100 parts by weight of the powder composition.

### Method of Manufacture

The powder composition can be formed using conventional methods understood in the art. The powder composition is not limited to a particular order or addition of the components. Low shear mixing should be used to prevent or lessen rupture of encapsulated components.

After mixing and formation is complete, the resulting powder composition can be transferred to a storage vessel or used shortly thereafter. The powder composition may be disposed in a syringe, tube, or other container adapted for holding the powder composition and allowing a user to apply the powder composition to a desired location.

### Method of Use

A method for joining a fastener and an element is also provided. The element defines a borehole. The element can comprise various materials. In various embodiments, the element comprises at least one of cement, concrete, mortar, or the like. Thus, the element may be a part of a building or be a building or construction component, e.g. a brick, slab, stone, wall, floor, etc.

The method comprises the steps of: providing the fastener; providing a composition; disposing the composition into the borehole; and disposing the fastener into the borehole. The composition can be disposed before, during, and/or after placement of the fastener. In various embodiments, at least a portion of the composition is disposed in the borehole before installing the fastener.

The composition is disposed at least partially between the fastener and the borehole to form a joint. The composition expands and cures in the joint to fasten the fastener in the borehole. For example, installation of the fastener into the borehole can rupture the microcapsules of the composition, thus facilitating expansion and cure of the same. In this way, the composition provides a means for self-anchoring of the fastener in the borehole.

The composition may be the powdered adhesive composition (e.g. as described above). The powdered composition can simply be poured or otherwise inserted, transferred, or injected into the borehole.

In some embodiments, the composition is the coating composition (e.g. as described above). In these embodiments, the coating composition can simply be poured or otherwise inserted, transferred, or injected into the borehole. In further embodiments, the method further comprises the step of applying the coating composition to a permeable carrier. For example, the coating composition can be applied to a mesh screen, with the mesh screen holding the coating composition in place, e.g. to prevent pooling, running, sagging, etc. The method can further include the step of drying the coating composition prior to the step of disposing the composition into the borehole. For example, the coated mesh screen can be dried to retain the adhesive thereon. The mesh screen can be sized to compliment the borehole, for example, but cutting into strips. The strips can then be place into the borehole, generally prior to installation of the fastener.

The method can further comprise the step of forming the borehole in the element. For example, a drill and bit can be used to drill the element, thus presenting the borehole. The method can further comprise the step of cleaning at least a portion of the borehole, generally prior to the step of disposing the composition into the borehole. For example, the borehole can be blown and/or vacuum to remove excess material from the hole, e.g. dust, powder, etc. The fastener can be as described above, e.g. an anchor or a screw.

### INDUSTRIAL APPLICABILITY

The compositions disclosed herein can be used to secure and/or to prevent loosening of a fastener. Various end applications and industries are possible, such as mechanical, industrial, and construction applications.

The coated fasteners herein can provide superior anchoring, bonding, and energy dissipation features in a single use, self-tapping anchoring especially in rigid and semi-rigid substrates. For example, the substrate can comprise cement, concrete, mortar, or the like. The substrate can also comprise lignocellulosic materials, such as wood and wood composites, e.g. particle board, fiberboard (e.g. MDF), and the like.

In various embodiments, the coating composition and fasteners including the coating composition (or "coated fasteners") provide excellent and/or improved anchoring to rigid or semi-rigid interfaces. Such interfaces can be susceptible to cracking and/or breakdown under one or more forces, e.g. shock force. The coated fasteners can be used in or for various substrates, such as those formed from metals and alloys thereof, masonry and other cementitious materials, wood and other lignocellulosic materials, ceramics, polymers, composites, and the like. In certain embodiments, the coated fasteners are especially useful for anchoring applications in masonry. The powder composition can be used for similar applications.

Coatings for fasteners and plugs provide multiple functions in a single coating. The single coating composition may be selected to provide two or more functions for improve plug and/or fastener performance. These functions include, but are not limited to, any combination of two or more of the following: lubrication; thread locking; anti-galling or anti-seizing; anchoring and self-tapping anchoring; and sealing. The compositions disclosed herein can be used to achieve sealing even on poorly fitting plugs and fasteners through a unique set of ingredients/components that provides for expansion of the coating, where an expansion agent is included in the coatings. While expansion may not be required for sealing in all applications, for example in plugs and fasteners with tight tolerances, the coatings as disclosed herein are particularly suited for sealing assemblies of parts with high tolerances or when the tolerances or part sizes are highly variable. The coatings as disclosed herein are also particularly suited for self-tapping anchoring in substrates which are rigid and semi-rigid with the tendency to fracture/crack upon shock force introduction.

While the present invention is not limited to a particular end application, use or industry, industrial and automotive equipment manufacturers often rely on fasteners to prevent critical parts from failing. The compositions of this disclosure provide excellent chemical and/or physical properties for improving loosening resistance of fasteners and joints. As such, the adhesives herein may also be referred to as "thread lock," "thread adhesive," "fastener adhesive," or "locking adhesive." In many embodiments, the compositions of this disclosure provide a means for self-anchoring of fasteners.

The following examples, illustrating the compositions, fasteners, and methods of this disclosure, are intended to illustrate and not to limit the invention.

### EXAM PLES

The following examples are included to demonstrate various embodiments of the invention. It should be appreciated by those of skill in the art that the techniques disclosed in the examples which follow represent techniques discovered by the inventor(s) to function well in the practice of the invention, and thus can be considered to constitute desirable modes for its practice. However, those of skill in the art should, in light of the present disclosure, appreciate that many changes can be made in the specific embodiments which are disclosed and still obtain a like or similar result without departing from the scope of the invention. All percentages are in wt.% and all measurements are conducted at 23°C unless indicated otherwise.

Provided below are exemplary formulations of the inventive ("Inv.") coating compositions of this disclosure, as well as formulations of comparative ("Comp.") coating compositions. The compositions are formed by adding the components to a vessel and mixing. The resulting compositions are mixed thoroughly with a low shear paddle blade so as to not prematurely rupture any microencapsulated components.

**Table I : Coating Compositions**

| | **Example Number** | | | | | | | |
|---|---|---|---|---|---|---|---|---|
| **Component (wt.%)** | **Comp. 1** | **Comp. 2** | **Inv. 1** | **Inv. 2** | **Inv. 3** | **Inv. 4** | **Inv. 5** | **Inv. 6** |
| Epoxy Curing Agent 1 | 11.65 | 11.65 | 11.65 | 11.65 | 11.65 | 11.65 | 11.65 | 11.65 |
| Epoxy Resin 1 ("ER1") | 46.07 | 0.00 | 34.97 | 43.19 | 40.31 | 37.38 | 23.03 | 11.51 |
| Expansion Agent 1 ("EA1") | 0.00 | 46.07 | 11.10 | 2.88 | 5.76 | 8.69 | 23.03 | 34.55 |
| Binder 1 | 5.25 | 5.25 | 5.25 | 5.25 | 5.25 | 5.25 | 5.25 | 5.25 |
| Solvent 1 | 36.10 | 36.10 | 36.10 | 36.10 | 36.10 | 36.10 | 36.11 | 36.11 |
| Anti-Settling Agent 1 | 0.83 | 0.83 | 0.83 | 0.83 | 0.83 | 0.83 | 0.83 | 0.83 |
| Pigment 1 | 0.09 | 0.09 | 0.09 | 0.09 | 0.09 | 0.09 | 0.09 | 0.09 |
| Pigment 2 | 0.01 | 0.01 | 0.01 | 0.01 | 0.01 | 0.01 | 0.01 | 0.01 |
| **TOTAL** | **100** | **100** | **100** | **100** | **100** | **100** | **100** | **100** |
| | | | | | | | | |
| **Ratio: ER1/EA1** | - | - | 3.15 | 15.00 | 7.00 | 4.30 | 1.00 | 0.33 |

Epoxy Curing Agent 1 is 4,4-diaminodicyclohexylmethane (PACM), which is commercially available.

Epoxy Resin 1 ("ER1") is a microencapsulated novolac epoxy resin, which is commercially available from Momentive Specialty Chemicals Inc.

Expansion Agent 1 ("EA1") is a microencapsulated methyl hydrogen silicone fluid, which is commercially available from Genesse Polymers Corporation.

Binder 1 is a solid bead methacrylate copolymer resin formed from methyl methacrylate, n-butyl methacrylate, and methacrylic acid, which is commercially available from Lucite International.

Solvent 1 is toluene, which is commercially available.

Anti-Settling Agent 1 is fumed silica having a polydimethylsiloxane (PDMS) surface treatment, which is commercially available from Cabot Corporation.

Pigment 1 is a pigment, which is commercially available from Pylam Products Company, Inc.

Pigment 2 is a pigment, which is commercially available from Day-Glo Color Corporation.

Provided below is another formulation of the inventive coating compositions of this disclosure. The composition is formed by adding the components to a vessel and mixing. The resulting composition is mixed thoroughly with a low shear paddle blade so as to not prematurely rupture any microencapsulated components.

**Table II : Coating Composition**

| **Component (wt.%)** | **Inventive Example No. 7** |
|---|---|
| Epoxy Curing Agent 1 | 11.65 |
| Epoxy Resin 2 ("ER2") | 34.97 |
| Expansion Agent 1 ("EA1") | 11.10 |
| Binder 1 | 5.25 |
| Solvent 1 | 36.10 |
| Anti-Settling Agent 1 | 0.83 |
| Pigment 1 | 0.09 |
| Pigment 2 | 0.01 |
| **TOTAL** | **100** |
| | |
| **Ratio: ER2/EA1** | 3.15 |

Epoxy Resin 2 ("ER2") is a microencapsulated bisphenol F epoxy resin, which is commercially available from Huntsman Advanced Materials.

Provided below is another formulation of the inventive coating compositions of this disclosure. The composition is formed by adding the components to a vessel and mixing. The resulting composition is mixed thoroughly with a low shear paddle blade so as to not prematurely rupture any microencapsulated components.

**Table III : Coating Composition**

| **Component (wt.%)** | **Inventive Example No. 8** |
|---|---|
| Epoxy Curing Agent 2 | 10.80 |
| Epoxy Curing Agent 3 | 1.20 |
| Epoxy Resin 1 ("ER1") | 30.00 |
| Expansion Agent 1 ("EA1") | 10.00 |
| Binder 1 | 5.85 |
| Binder 2 | 7.20 |
| Solvent 2 | 34.39 |
| Pigment 3 | 0.11 |
| Pigment 4 | 0.45 |
| **TOTAL** | **100** |
| | |
| **Ratio: ER1/EA1** | 3.00 |

Epoxy Curing Agent 2 is a tertiary amine, which is commercially available from BASF Corp.

Epoxy Curing Agent 3 is tetraethylenepentamine (TEPA), which is commercially available from Huntsman Corp.

Pigment 3 is TiO₂, which is commercially available.

Pigment 4 is a pigment, which is commercially available from BASF Corp.

Binder 2 is a solid bead methyl-methacrylate (MMA) copolymer resin, which is commercially available from Dow of Midland, MI.

Solvent 2 is dimethyl carbonate (DMC), which is commercially available.

Provided below are exemplary formulations of UV-curable coating compositions related to this disclosure. The compositions are formed by adding the components to a vessel and mixing. The resulting compositions are mixed thoroughly with a low shear paddle blade so as to not prematurely rupture any microencapsulated components.

**Table IV : UV-Curable Coating Compositions**

| **Component (wt.%)** | **Reference Example No. 9** | **Reference Example No. 10** |
|---|---|---|
| Epoxy Curing Agent 4 | 17.13 | 33.00 |
| Epoxy Curing Agent 5 | 5.54 | 4.53 |
| Epoxy Curing Agent 6 | 2.00 | 0 |
| Epoxy Resin 1 | 21.00 | 30.00 |
| Expansion Agent 1 | 21.00 | 10.00 |
| Binder 3 | 21.37 | 21.10 |
| Binder 4 | 10.00 | 0 |
| Photoinitiator 1 | 1.25 | 0 |
| Photoinitiator 2 | 0.66 | 1.28 |
| Pigment 5 | 0.05 | 0.09 |
| **TOTAL** | **100** | **100** |

Epoxy Curing Agent 4 is an amine functional epoxy-amine adduct.

Epoxy Curing Agent 5 is dimethylbenzylamine (BDMA), which is commercially available.

Epoxy Curing Agent 6 is 2,4,6-tris(dimethylaminomethyl)phenol, which is commercially available from Elé Corporation.

Binder 3 is a 2-mole ethoxylated bisphenol A dimethyacylate, which is commercially available from Sartomer Americas.

Binder 4 is an aliphatic polyester urethane diacrylate, which is commercially available from Dymax Corporation.

Photoinitiator 1 is a blend of 50% 2-hydroxy-2-methyl-1-phenyl-propan-1-one and 50% 2,4,6-trimethylbenzoyl-diphenyl-phosphine oxide, which is commercially available from BASF Corp.

Photoinitiator 2 is 2,4,6-trimethylbenzoyldiphenylphosphine oxide (TPO), which is commercially available.

Pigment 5 a pigment, which is commercially available from Lansco Colors.

Physical properties of the compositions above were evaluated. Specifically, the compositions were used to coat various types of conventional fasteners using the techniques described herein. In general, flow coating can be used for coating the fasteners. If present, solvent can be removed by heating, e.g. at 70 °C for 5-10 minutes. In general, the applied material has a thread fill of about 30% or less, or about 50% or less, up to 100%, following removal of the solvent. The applied material adheres to the fastener surface as a solid layer.

Provided below are test results for certain Examples presented above using different types of fasteners and different type of substrates in which the fasteners are installed. Specifically, the uncoated (control or blank) fasteners and coated fasteners (inventive) are installed in concrete, MDF, and wood substrates. These results are illustrated in the tables below. As used below, "Break" is break away torque, and "Prevail" is prevailing off torque, each in in·lbs unless otherwise indicated. Evaluation of the fasteners are performed in accordance with ASTM D5649.

**Table V: Control fasteners installed in concrete**

| **Uncoated Tapcon Screw - Tapered Head** | | |
|---|---|---|
| Uncoated | Break | Prevail |
| 1 | 12 | 6 |
| 2 | 8 | 5 |
| 3 | 12 | 10 |
| Avg (in·lbs) | 10.7 | 7.0 |

| **Uncoated Masonry Screw** - **Tapered Head** | | |
|---|---|---|
| Uncoated | Break | Prevail |
| 1 | 10 | 3 |
| 2 | 12 | 6 |
| 3 | 10 | 2 |
| Avg | 10.7 | 3.7 |

| **Uncoated Tapcon Screw** - **Impact Testing** | | |
|---|---|---|
| Uncoated | Break | Prevail |
| 1 | 28 | 12 |
| 2 | 48 | 26 |
| 3 | 20 | 19 |
| 4 | 22 | 10 |
| 5 | 56 | 40 |
| Avq | 34.8 | 21.4 |

| **Uncoated Spax Screw** - **Impact Testing** | | |
|---|---|---|
| Uncoated | Break | Prevail |
| 1 | 5 | 2 |
| 2 | 22 | 8 |
| 3 | 10 | 2 |
| 4 | 14 | 12 |
| 5 | 7 | 3 |
| Avq | 11.6 | 5.4 |

**Table VI: Fasteners coated with Inventive Example 1 and installed in concrete**

| **Tapcon Screw** - **Tapered Head - Inv. 1** | | |
|---|---|---|
| Single coat | Break | Prevail |
| 1 | 65 | 55 |
| 2 | 87 | 45 |
| 3 | 60 | 42 |
| Avq (in·lbs) | 70.7 | 47.3 |
| **Improvement** | **6.6** | **6.8** |

| **SPAX Screw** - **Tapered Head** - **Inv. 1** | | |
|---|---|---|
| Single coat | Break | Prevail |
| 1 | 40 | 30 |
| 2 | 45 | 32 |
| 3 | 25 | 10 |
| Avg | 36.7 | 24.0 |
| **Improvement** | **3.4** | **6.5** |

| **Impact Testing - Inv. 1** | | |
|---|---|---|
| Tapcon Screw | Break | Prevail |
| 1 | 38 | 32 |
| 2 | 50 | 40 |
| 3 | 100 | 70 |
| 4 | 120 | 90 |
| 5 | 140 | 85 |
| Avq | 89.6 | 63.4 |
| **Improvement** | **2.6** | **3** |

| SPAX Screw | Break | Prevail |
|---|---|---|
| 1 | 17 | 10 |
| 2 | 42 | 36 |
| 3 | 42 | 21 |
| Avq | 33.7 | 22.3 |
| **Improvement** | **2.9** | **4.1** |

**Table VII: Control fasteners installed in medium density fiberboard (MDF)**

| **Control** - **No material** / **Blank screw** | | |
|---|---|---|
| Blank | Break | Prevail |
| 1 | 4.5 | 3.5 |
| 2 | 2.5 | 1.5 |
| 3 | 3.5 | 2.5 |
| 4 | 3 | 2.5 |
| 5 | 3.5 | 2.5 |
| **Avg (in*lbs)** | **3.4** | **2.5** |

| **Over Torque** | | |
|---|---|---|
| Blank | break | prevail |
| 1 | 3 | 2 |
| 2 | 4 | 2 |
| 3 | 2 | 2 |
| 4 | 4 | 4 |
| 5 | 4 | 5 |
| **Avg** | **3.4** | **3** |

| **Removal after Flex** | | |
|---|---|---|
| Blank | Break | Prevail |
| 1 | 1 | 2 |
| 2 | 1 | 2 |
| 3 | 0 | 3 |
| **Avg** | **0.67** | **2.33** |

| **Joint Flex Testing** | | |
|---|---|---|
| Blank | Maximum Load | Relaxed Load |
| 1 | 47 | 36 |
| 2 | 42 | 34 |
| 3 | 36 | 30 |
| 4 | 48 | 42 |
| 5 | 45 | 38 |
| 6 | 42 | 38 |
| **Avg** | **43.33** | **36.33** |

**Table VIII: Fasteners coated with Comparative Examples and installed in MDF**

| Comp. 1 | Break | Prevail |
|---|---|---|
| 1 | 19 | 5 |
| 2 | 14 | 5 |
| 3 | 14 | 5 |
| 4 | 13 | 5 |
| 5 | 14 | 5 |
| Avq (in*lbs) | 14.8 | 5 |
| **Improvement** | **4.4** | **2** |

| Comp. 2 | Break | Prevail |
|---|---|---|
| 1 | 12 | 5 |
| 2 | 11 | 5 |
| 3 | 14 | 5 |
| 4 | 13 | 5 |
| 5 | 12 | 5 |
| Avq (in*lbs) | 12.4 | 5 |
| **Improvement** | **3.6** | **2** |

**Table VIX: Fasteners coated with Inventive Example 1 and installed in MDF**

| Inv. 1 | Break | Prevail |
|---|---|---|
| 1 | 15 | 4 |
| 2 | 18 | 4 |
| 3 | 20 | 5 |
| 4 | 13 | 5 |
| 5 | 18 | 7 |
| Avq (in*lbs) | 16.8 | 5 |
| **Improvement** | **4.9** | **2** |

| **Over Torque** | | |
|---|---|---|
| Inv. 1 | Break | Prevail |
| 1 | 11 | 6 |
| 2 | 18 | 5 |
| 3 | 25 | 6 |
| 4 | 13 | 5 |
| 5 | 10 | 5 |
| Avg | 15.4 | 5.4 |
| **Improvement** | **4.5** | **1.8** |

| **Removal after Flex** | | |
|---|---|---|
| Inv. 1 | Break | Prevail |
| 1 | 16 | 8 |
| 2 | 25 | 11 |
| 3 | 16 | 11 |
| Avq | 19.00 | 10.00 |
| **Improvement** | **28.4** | **4.3** |

| **Joint Flex Testing** | | |
|---|---|---|
| Inv. 1 | Maximum Load | Relaxed Load |
| 1 | 111 | 97 |
| 2 | 106 | 90 |
| 3 | 98 | 84 |
| 4 | 87 | 72 |
| 5 | 70 | 60 |
| 6 | 63 | 53 |
| Avq | 89.17 | 76.00 |
| **Improvement** | **2.1** | **2.1** |

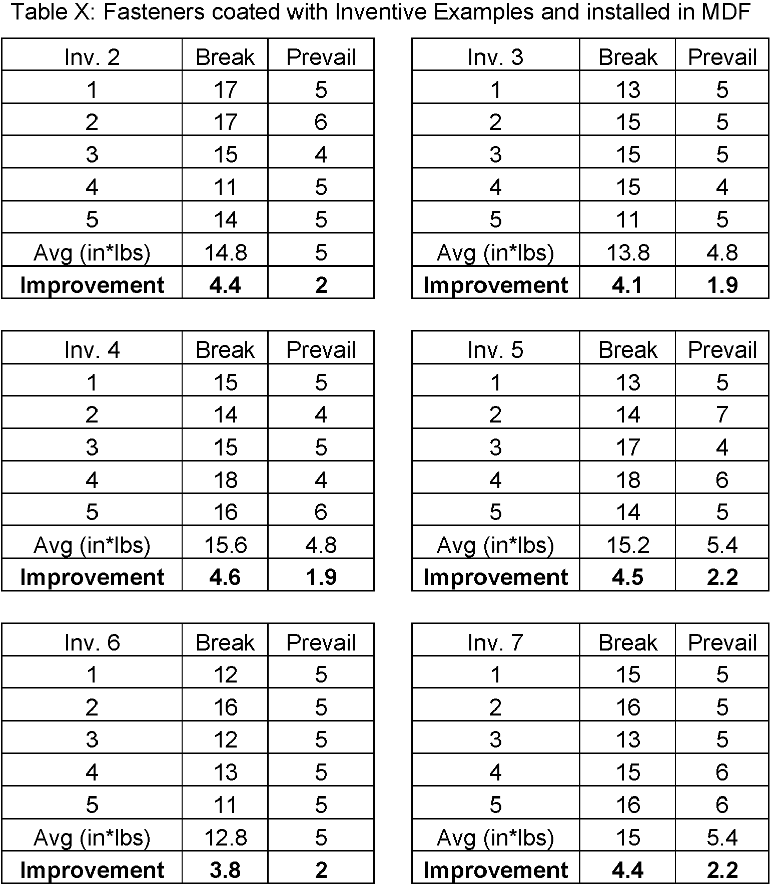

**Table XI: Control fasteners installed in weather treated wood**

| Uncoated / Blank Exterior Screws | Break | Prevail |
|---|---|---|
| 1 | 7 | 8 |
| 2 | 8 | 7 |
| 3 | 7 | 7 |
| 4* | 20 | 20 |
| 5* | 20 | 10 |
| Averaqe (in*lbs) | 12.4 | 10.4 |
| **Knot in the wood* | | |

| Uncoated / Blank Deck Screws | Break | Prevail |
|---|---|---|
| 1 | 20 | 16 |
| 2 | 22 | 17 |
| 3 | 18 | 15 |
| 4 | 12 | 10 |
| 5 | 10 | 5 |
| Averaqe (in*lbs) | 16.4 | 12.6 |

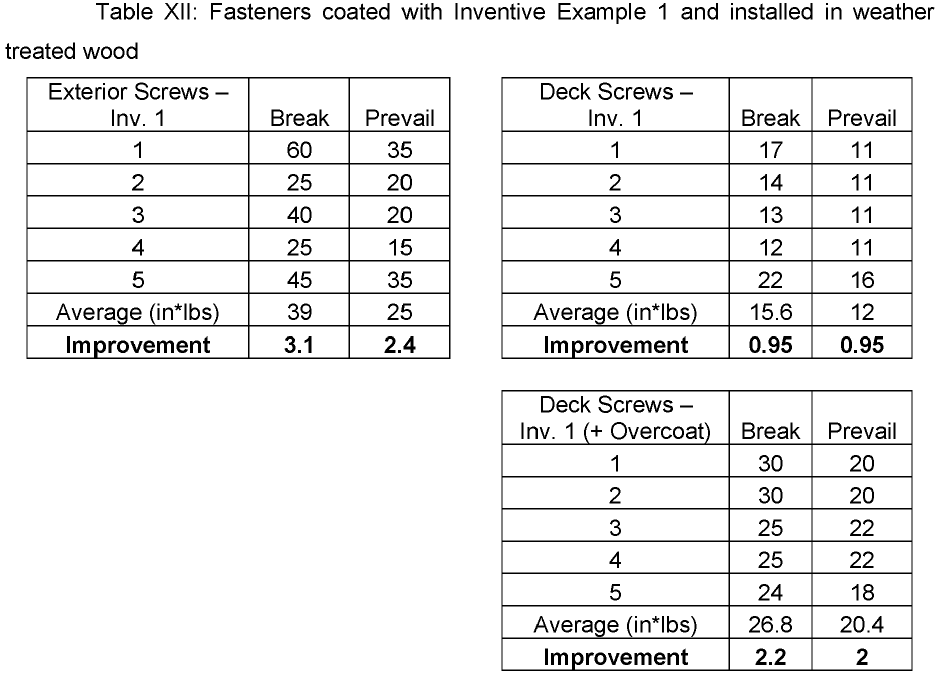

The overcoat is formed from an acrylic composition, which is commercially available from ND Industries, Inc. of Clawson, MI.

Provided below is an exemplary formulation of a powdered adhesive composition related to this disclosure. The composition is formed by adding the components to a vessel and mixing. The resulting composition is powder blended in such a way as to not prematurely rupture any microencapsulated components, such as by rolling.

**Table XIII : Powdered Adhesive Composition**

| **Component (wt.%)** | **Reference Example No. 11** |
|---|---|
| Epoxy Curing Agent 1 | 20.97 |
| Epoxy Resin 1 | 62.93 |
| Expansion Agent 1 | 7.10 |
| Anti-Caking Agent 1 | 9.00 |
| **TOTAL** | **100** |

Anti-Caking Agent 1 is precipitated silica, commercially available from PPG Industries, Inc.

As like above, physical properties of the powdered adhesive above were evaluated. Specifically, drill was used to form a borehole in concrete. The hole was cleaned out using compressed air. The powder composition was then transferred to the hole. Next, a masonry anchor (Tapcon screw) was installed in the hole. The adhesive expands and cures to retain the fastener. Provided below are test results, which can be compared against the Tapcon control screws presented in Table V above.

**Table XIV : Fasteners installed in concrete using Reference Example 11**

| **Tapcon Screw** - **Cured Powder Adhesive** | | |
|---|---|---|
| Reference Example No. 11 | Break | Prevail |
| 1 | 220 | 200 |
| 2 | 175 | 175 |
| 3 | 195 | 45 |
| Avq (in*lbs) | 196.7 | 140.0 |
| **Improvement** | **18.4** | **20** |

| **Impact Testing** | | |
|---|---|---|
| Reference Example No. 11 | Break | Prevail |
| 1 | 160 | 30 |
| 2 | 160 | 150 |
| 3 | 170 | 150 |
| 4 | 170 | 150 |
| 5 | 165 | 140 |
| Avq | 165.0 | 124.0 |
| **Improvement** | **4.7** | **5.8** |

Referring to the Figures, some of the test results presented above can be better appreciated, e.g. for purposes of comparison. "Inv. 1 coating" is formed from Inventive Example No. 1. "Ref. 11 powder" is Reference Example No. 11. The "epoxy threadlocker" is a conventional threadlocker, commercially available from ND Industries, Inc. The "acrylic threadlocker" is a conventional threadlocker, commercially available from ND Industries, Inc.

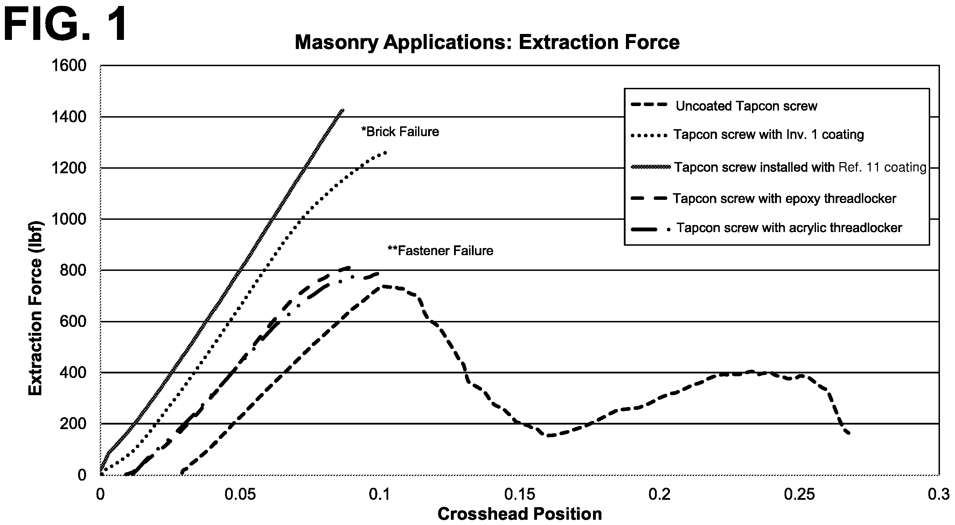

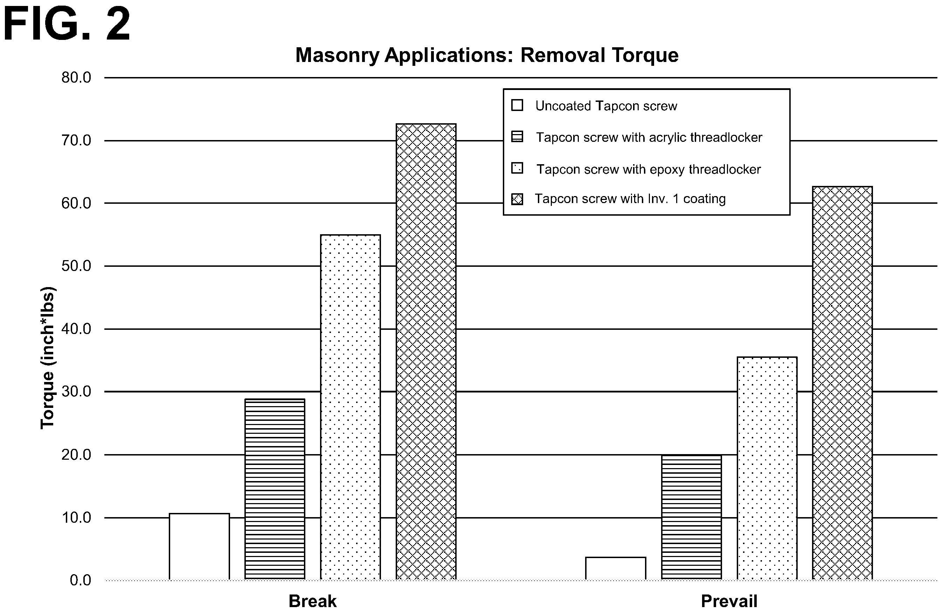

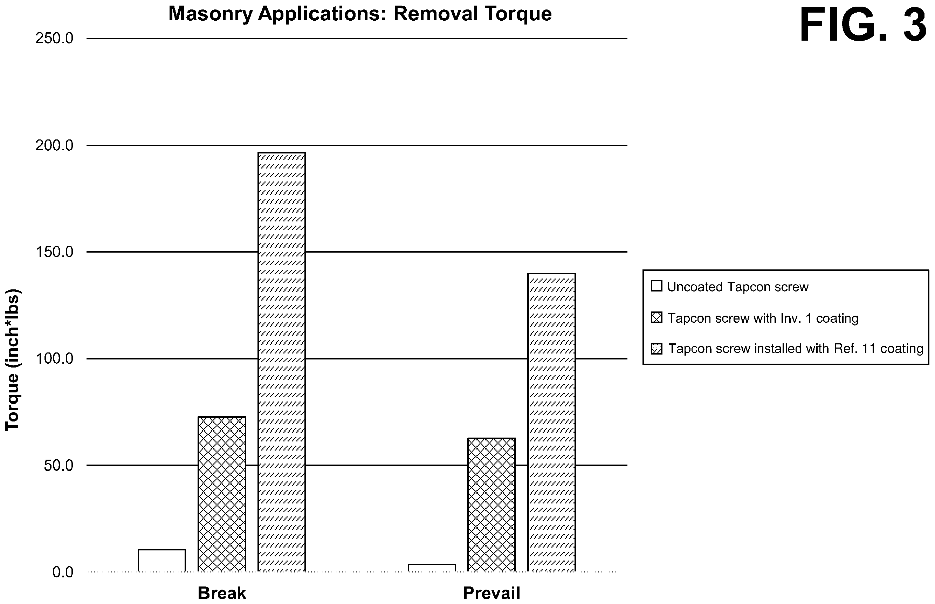

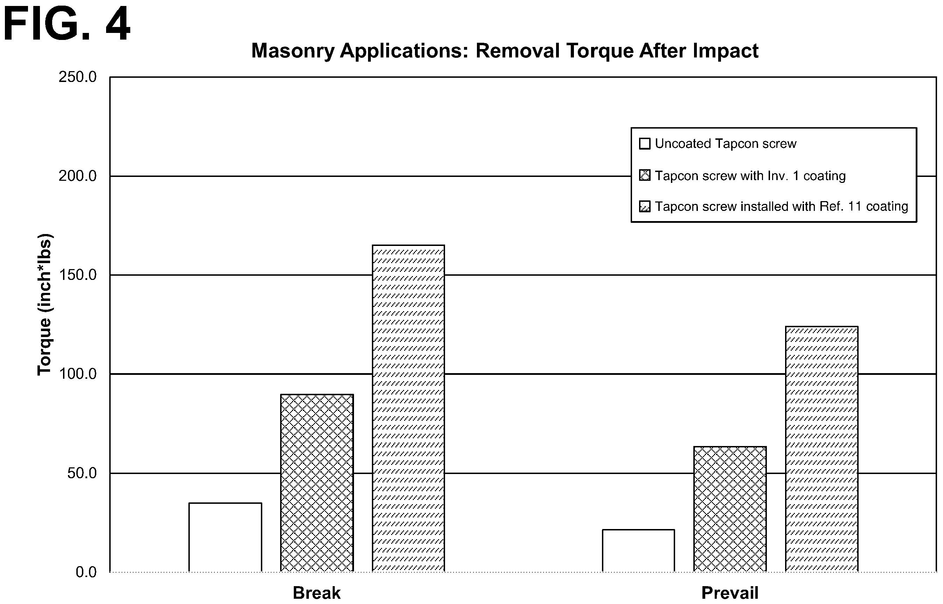

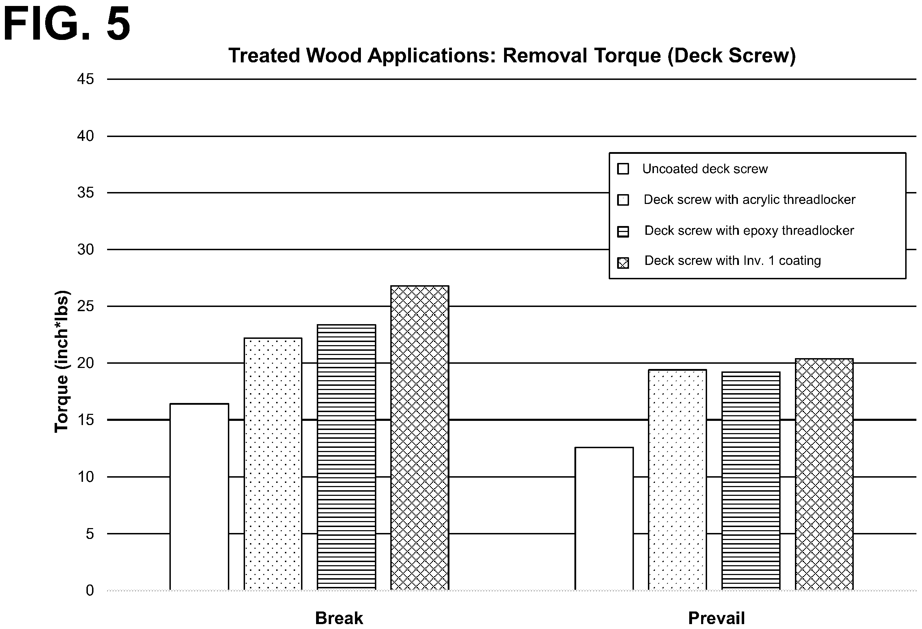

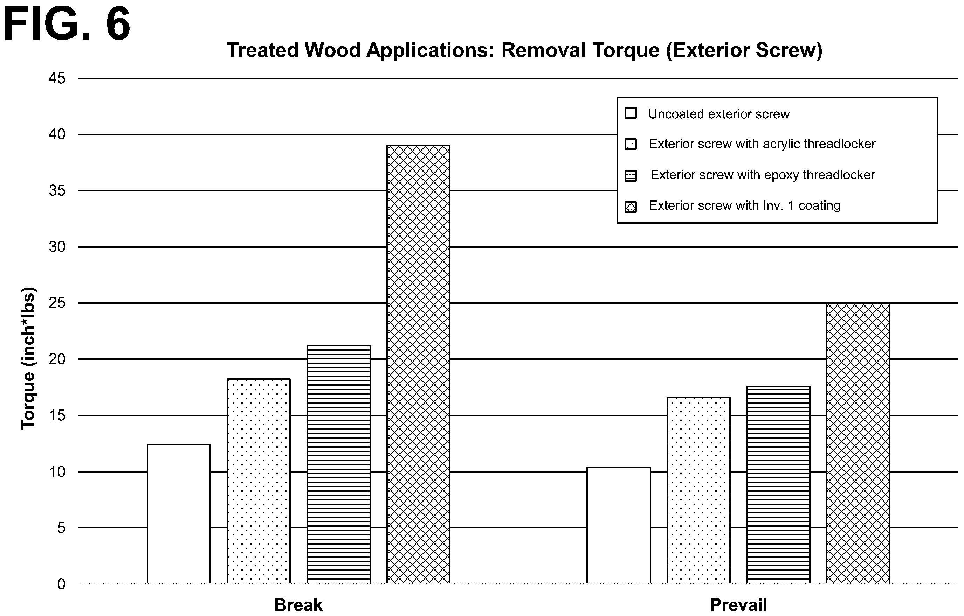

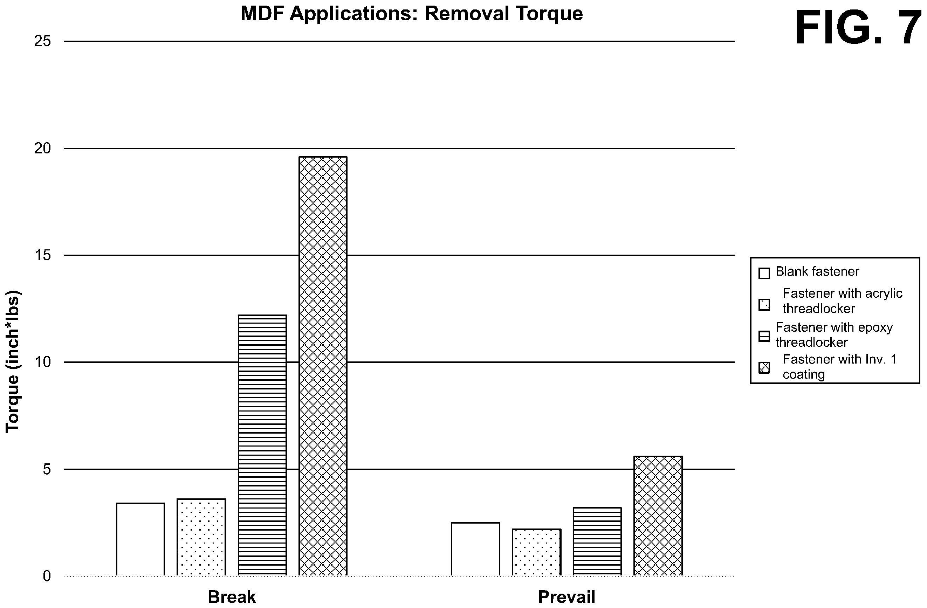

FIG. 1 is a chart illustrating extraction force test results for inventive and comparative examples of fasteners installed in concrete. FIG. 2 is a chart illustrating removal torque test results for inventive and comparative examples of fasteners installed in concrete. FIG. 3 is another chart illustrating removal torque test results for inventive and comparative examples of fasteners installed in concrete. FIG. 4 is a chart illustrating removal torque (after impact) test results for inventive and comparative examples of fasteners installed in concrete. FIG. 5 is a chart illustrating removal torque test results for inventive and comparative examples of fasteners (deck screws) installed in treated wood. FIG. 6 is a chart illustrating removal torque test results for inventive and comparative examples of fasteners (exterior screws) installed in treated wood. FIG. 7 is a chart illustrating removal torque test results for inventive and comparative examples of fasteners installed in medium-density fiberboard (MDF).

It is to be understood that the appended claims are not limited to express any particular compounds, compositions, or methods described in the detailed description, which may vary between particular embodiments which fall within the scope of the appended claims. With respect to any Markush groups relied upon herein for describing particular features or aspects of various embodiments, it is to be appreciated that different, special, and/or unexpected results may be obtained from each member of the respective Markush group independent from all other Markush members. Each member of a Markush group may be relied upon individually and or in combination and provides adequate support for specific embodiments within the scope of the appended claims.

It is also to be understood that any ranges and subranges relied upon in describing various embodiments of the present invention independently and collectively fall within the scope of the appended claims, and are understood to describe and contemplate all ranges including whole and/or fractional values therein, even if such values are not expressly written herein. One of skill in the art readily recognizes that the enumerated ranges and subranges sufficiently describe and enable various embodiments of the present invention, and such ranges and subranges may be further delineated into relevant halves, thirds, quarters, fifths, and so on. As just one example, a range "of from 0.1 to 0.9" may be further delineated into a lower third, i.e., from 0.1 to 0.3, a middle third, i.e., from 0.4 to 0.6, and an upper third, i.e., from 0.7 to 0.9, which individually and collectively are within the scope of the appended claims, and may be relied upon individually and/or collectively and provide adequate support for specific embodiments within the scope of the appended claims. In addition, with respect to the language which defines or modifies a range, such as "at least," "greater than," "less than," "no more than," and the like, it is to be understood that such language includes subranges and/or an upper or lower limit. As another example, a range of "at least 10" inherently includes a subrange of from at least 10 to 35, a subrange of from at least 10 to 25, a subrange of from 25 to 35, and so on, and each subrange may be relied upon individually and/or collectively and provides adequate support for specific embodiments within the scope of the appended claims. Finally, an individual number within a disclosed range may be relied upon and provides adequate support for specific embodiments within the scope of the appended claims. For example, a range "of from 1 to 9" includes various individual integers, such as 3, as well as individual numbers including a decimal point (or fraction), such as 4.1, which may be relied upon and provide adequate support for specific embodiments within the scope of the appended claims.

The present invention has been described herein in an illustrative manner, and it is to be understood that the terminology which has been used is intended to be in the nature of words of description rather than of limitation. Many modifications and variations of the present invention are possible in light of the above teachings. The present invention may be practiced otherwise than as specifically described within the scope of the appended claims. The subject matter of all combinations of independent and dependent claims, both single and multiple dependent, is herein expressly contemplated.

## Claims

1. A coating composition for forming a fastener adhesive, said coating composition comprising:
A) an epoxy curing agent component;
B) a microencapsulated epoxy resin component;
C) an expansion agent component;
D) a binder component; and
E) a solvent component;
wherein the microencapsulated epoxy resin component B) and the expansion agent component C) are present in a weight ratio of from about 15:1 to about 1:1.

2. The coating composition according to claim 1, wherein the microencapsulated epoxy resin component B) and the expansion agent component C) are present in a weight ratio of from about 4:1 to about 2:1.

3. The coating composition according to claim 1 or 2, wherein the epoxy curing agent component A): i) comprises an amine; ii) is present in an amount of from about 1 to about 20 part(s) by weight based on 100 parts by weight of the composition; or iii) both i) and ii).

4. The coating composition according to any one of claims 1 to 3, wherein the microencapsulated epoxy resin component B): i) comprises a novolac epoxy resin, a bisphenol F epoxy resin, or a combination thereof; ii) is present in an amount of from about 20 to about 50 parts by weight based on 100 parts by weight of the composition; or iii) both i) and ii).

5. The coating composition according to any one of claims 1 to 4, wherein the expansion agent component C): i) comprises a microencapsulated expansion agent; ii) is present in an amount of from about 1 to about 25 part(s) by weight based on 100 parts by weight of the composition; or iii) both i) and ii).

6. The coating composition according to any one of claims 1 to 5, wherein the binder component D): i) comprises an acrylic resin; ii) is present in an amount of from about 1 to about 10 part(s) by weight based on 100 parts by weight of the composition; or iii) both i) and ii).

7. The coating composition according to any one of claims 1 to 6, wherein the solvent component E): i) comprises an organic solvent; ii) is present in an amount of from about 20 to about 50 parts by weight based on 100 parts by weight of the composition; or iii) both i) and ii).

8. The coating composition according to any one of claims 1 to 7, further comprising an anti-settling component, a colorant component, or a combination thereof.

9. An article comprising:
a substrate having a surface; and
an adhesive composition disposed on the surface;
wherein the adhesive composition is prepared from the coating composition as set forth in any one of claims 1 to 8.

10. A fastener comprising the article as set forth in claim 9, wherein the substrate surface comprises a threaded surface, optionally wherein the substrate is selected from the group consisting of anchors, bolts, nuts, screws, studs, stand-offs, plugs/caps, and combinations thereof.

11. An assembly including a fastener, wherein the fastener is as set forth in claim 10 and wherein the adhesive composition expands and cures to form an adhesive.

12. A method of making an article, said method comprising the steps of:
providing a substrate having a surface;
providing an adhesive composition; and
applying the adhesive composition to the surface of the substrate;
optionally, drying the adhesive composition after application;
optionally, applying an overcoat composition to the applied adhesive composition to form a sacrificial layer thereon;
wherein the adhesive composition is the coating composition as set forth in any one of claims 1 to 8.

13. Use of the composition as set forth in any one of claims 1 to 8 to secure and/or to prevent loosening of a fastener.

14. A method for joining a fastener and an element defining a borehole, said method comprising the steps of:
providing the fastener;
providing a composition;
disposing the composition into the borehole; and
disposing the fastener into the borehole;
optionally, applying the coating composition to a permeable carrier, and optionally, drying the coating composition prior to the step of disposing the composition into the borehole;
optionally, forming the borehole in the element, and optionally, cleaning at least a portion of the borehole, prior to the step of disposing the composition into the borehole;
wherein the composition is the coating composition as set forth in any one of claims 1 to 8;
wherein the composition is disposed at least partially between the fastener and the borehole to form a joint; and
wherein the composition expands and cures in the joint to fasten the fastener in the borehole.

15. The method according to claim 14, wherein: i) the fastener is an anchor or screw; ii) the element comprises at least one of cement, concrete, or mortar; or iii) both i) and ii).

## Patentansprüche

1. Beschichtungszusammensetzung zum Bilden eines Befestigungsklebstoffs, die Beschichtungszusammensetzung umfassend:
A) eine Epoxidhärtemittel-Komponente;
B) eine mikroverkapselte Epoxidharz-Komponente;
C) eine Expansionsmittel-Komponente;
D) eine Bindemittel-Komponente; und
E) eine Lösungsmittel-Komponente;
wobei die mikroverkapselte Epoxidharz-Komponente B) und die Expansionsmittel-Komponente C) in einem Gewichtsverhältnis von etwa 15:1 bis etwa 1:1 vorhanden sind.

2. Beschichtungszusammensetzung gemäß Anspruch 1, wobei die mikroverkapselte Epoxidharz-Komponente B) und die Expansionsmittel-Komponente C) in einem Gewichtsverhältnis von etwa 4:1 bis etwa 2:1 vorhanden sind.

3. Beschichtungszusammensetzung gemäß Anspruch 1 oder 2, wobei die Epoxidhärtemittel-Komponente A): i) ein Amin umfasst; ii) in einer Menge von etwa 1 bis etwa 20 Gewichtsanteilen, bezogen auf 100 Gewichtsanteile der Zusammensetzung, vorhanden ist; oder iii) sowohl i) als auch ii).

4. Beschichtungszusammensetzung gemäß einem der Ansprüche 1 bis 3, wobei die mikroverkapselte Epoxidharz-Komponente B): i) ein Novolak-Epoxidharz, ein Bisphenol-F-Epoxidharz oder eine Kombination davon umfasst; ii) in einer Menge von etwa 20 bis etwa 50 Gewichtsanteilen, bezogen auf 100 Gewichtsanteile der Zusammensetzung, vorhanden ist; oder iii) sowohl i) als auch ii).

5. Beschichtungszusammensetzung gemäß einem der Ansprüche 1 bis 4, wobei die Expansionsmittel-Komponente C): i) ein mikroverkapseltes Expansionsmittel umfasst; ii) in einer Menge von etwa 1 bis etwa 25 Gewichtsanteilen, bezogen auf 100 Gewichtsanteile der Zusammensetzung, vorhanden ist; oder iii) sowohl i) als auch ii).

6. Beschichtungszusammensetzung gemäß einem der Ansprüche 1 bis 5, wobei die Bindemittel-Komponente D): i) ein Acrylharz umfasst; ii) in einer Menge von etwa 1 bis etwa 10 Gewichtsanteilen, bezogen auf 100 Gewichtsanteile der Zusammensetzung, vorhanden ist; oder iii) sowohl i) als auch ii).

7. Beschichtungszusammensetzung gemäß einem der Ansprüche 1 bis 6, wobei die Lösungsmittel-Komponente E): i) ein organisches Lösungsmittel umfasst; ii) in einer Menge von etwa 20 bis etwa 50 Gewichtsanteilen, bezogen auf 100 Gewichtsanteile der Zusammensetzung, vorhanden ist; oder iii) sowohl i) als auch ii).

8. Beschichtungszusammensetzung gemäß einem der Ansprüche 1 bis 7, ferner umfassend eine Absetzverhinderungs-Komponente, eine Färbemittel-Komponente oder eine Kombination davon.

9. Artikel, umfassend:
ein Substrat, das eine Oberfläche aufweist; und
eine Klebstoffzusammensetzung, die auf die Oberfläche aufgebracht ist;
wobei die Klebstoffzusammensetzung aus der Beschichtungszusammensetzung wie dargelegt in einem der Ansprüche 1 bis 8 hergestellt ist.

10. Befestigungsmittel, umfassend den Artikel wie dargelegt in Anspruch 9, wobei die Substratoberfläche eine Gewindeoberfläche umfasst, optional wobei das Substrat ausgewählt ist aus der Gruppe, bestehend aus Ankern, Bolzen, Muttern, Schrauben, Stiften, Abstandhaltern, Stopfen/Kappen und Kombinationen davon.

11. Anordnung, die ein Befestigungsmittel beinhaltet, wobei das Befestigungsmittel wie dargelegt in Anspruch 10 ist und wobei die Klebstoffzusammensetzung expandiert und aushärtet, um einen Klebstoff zu bilden.

12. Fertigungsverfahren eines Artikels, das Verfahren umfassend die folgenden Schritte:
Bereitstellen eines Substrats, das eine Oberfläche aufweist;
Bereitstellen einer Klebstoffzusammensetzung; und
Auftragen der Klebstoffzusammensetzung auf die Oberfläche des Substrats; optional Trocknen der Klebstoffzusammensetzung nach Auftragen;
optional Auftragen einer Deckschichtzusammensetzung auf die aufgetragene Klebstoffzusammensetzung, um eine Opferschicht darauf zu bilden;
wobei die Klebstoffzusammensetzung die Beschichtungszusammensetzung wie dargelegt in einem der Ansprüche 1 bis 8 ist.

13. Verwendung der Zusammensetzung wie dargelegt in einem der Ansprüche 1 bis 8 zum Sichern und/oder Verhindern eines Lockerns eines Befestigungsmittels.

14. Verfahren zum Verbinden eines Befestigungsmittels und eines Elements, das ein Bohrloch definiert, das Verfahren umfassend die folgenden Schritte:
Bereitstellen des Befestigungsmittels;
Bereitstellen einer Zusammensetzung;
Einbringen der Zusammensetzung in das Bohrloch; und
Einbringen des Befestigungsmittels in das Bohrloch;
optional Auftragen der Beschichtungszusammensetzung auf einen permeablen Träger und optional Trocknen der Beschichtungszusammensetzung vor dem Schritt eines Einbringens der Zusammensetzung in das Bohrloch;
optional Bilden des Bohrlochs in dem Element und optional Reinigen mindestens eines Abschnitts des Bohrlochs vor dem Schritt eines Einbringens der Zusammensetzung in das Bohrloch;
wobei die Zusammensetzung die Beschichtungszusammensetzung wie dargelegt in einem der Ansprüche 1 bis 8 ist;
wobei die Zusammensetzung mindesten teilweise zwischen dem Befestigungselement und dem Bohrloch eingebracht wird, um eine Verbindung zu bilden; und
wobei die Zusammensetzung expandiert und in der Verbindung aushärtet, um das Befestigungsmittel in dem Bohrloch zu befestigen.

15. Verfahren gemäß Anspruch 14, wobei: i) das Befestigungsmittel ein Anker oder eine Schraube ist; ii) das Element mindestens eines von Zement, Beton oder Mörtel umfasst; oder iii) sowohl i) als auch ii).

## Revendications

1. Une composition de revêtement pour former un adhésif de fixation, ladite composition de revêtement comprenant :
A) un composant d'agent de durcissement époxy ;
B) un composant de résine époxy microencapsulé ;
C) un composant d'agent d'expansion ;
D) un composant liant ; et
E) un composant solvant ;
dans laquelle le composant de résine époxy microencapsulé B) et le composant d'agent d'expansion C) sont présents dans un rapport pondéral d'environ 15:1 à environ 1:1.

2. La composition de revêtement selon la revendication 1, dans laquelle le composant de résine époxy microencapsulé B) et le composant d'agent d'expansion C) sont présents dans un rapport pondéral d'environ 4:1 à environ 2:1.

3. La composition de revêtement selon la revendication 1 ou 2, dans laquelle le composant d'agent de durcissement époxy A) : i) comprend une aminé ; ii) est présent en une quantité d'environ 1 à environ 20 partie(s) en poids sur la base de 100 parties en poids de la composition ; ou iii) à la fois i) et ii).

4. La composition de revêtement selon l'une quelconque des revendications 1 à 3, dans laquelle le composant de résine époxy microencapsulé B) : i) comprend une résine époxy novolaque, une résine époxy de bisphénol F, ou une combinaison de celles-ci ; ii) est présent en une quantité d'environ 20 à environ 50 parties en poids sur la base de 100 parties en poids de la composition ; ou iii) à la fois i) et ii).

5. La composition de revêtement selon l'une quelconque des revendications 1 à 4, dans laquelle le composant d'agent d'expansion C) : i) comprend un agent d'expansion microencapsulé ; ii) est présent en une quantité d'environ 1 à environ 25 partie(s) en poids sur la base de 100 parties en poids de la composition ; ou iii) à la fois i) et ii).

6. La composition de revêtement selon l'une quelconque des revendications 1 à 5, dans laquelle le composant liant D) : i) comprend une résine acrylique ; ii) est présent en une quantité d'environ 1 à environ 10 partie(s) en poids sur la base de 100 parties en poids de la composition ; ou iii) à la fois i) et ii).

7. La composition de revêtement selon l'une quelconque des revendications 1 à 6, dans laquelle le composant solvant E) : i) comprend un solvant organique ; ii) est présent en une quantité d'environ 20 à environ 50 parties en poids sur la base de 100 parties en poids de la composition ; ou iii) à la fois i) et ii).

8. La composition de revêtement selon l'une quelconque des revendications 1 à 7, comprenant en outre un composant anti-sédimentation, un composant colorant, ou une combinaison de ceux-ci.

9. Un article comprenant :
un substrat ayant une surface ; et
une composition adhésive disposée sur la surface ;
dans lequel la composition adhésive est préparée à partir de la composition de revêtement comme indiqué dans l'une quelconque des revendications 1 à 8.

10. Un élément de fixation comprenant l'article comme indiqué dans la revendication 9, dans lequel la surface du substrat comprend une surface filetée, éventuellement dans lequel le substrat est choisi dans le groupe constitué par les ancrages, les boulons, les écrous, les vis, les goujons, les séparateurs, les bouchons/capuchons, et leurs combinaisons.

11. Un ensemble comprenant un élément de fixation, dans lequel l'élément de fixation est comme indiqué dans la revendication 10 et dans lequel la composition adhésive se dilate et durcit pour former un adhésif.

12. Un procédé de fabrication d'un article, ledit procédé comprenant les étapes consistant à :
fournir un substrat ayant une surface ;
fournir une composition adhésive ; et
appliquer la composition adhésive sur la surface du substrat ;
éventuellement, le séchage de la composition adhésive après l'application ;
éventuellement, l'application d'une composition de couche de finition à la composition adhésive appliquée pour former une couche sacrificielle sur celle-ci ;
dans lequel la composition adhésive est la composition de revêtement comme indiqué dans l'une quelconque des revendications 1 à 8.

13. Utilisation de la composition comme indiqué dans l'une quelconque des revendications 1 à 8 pour fixer et/ou empêcher le desserrage d'un élément de fixation.

14. Un procédé d'assemblage d'un élément de fixation et d'un élément définissant un trou de forage, ledit procédé comprenant les étapes consistant à :
fournir l'élément de fixation ;
fournir une composition ;
disposer la composition dans le trou de forage ; et
disposer l'élément de fixation dans le trou de forage ;
éventuellement, l'application de la composition de revêtement sur un support perméable, et éventuellement, le séchage de la composition de revêtement avant l'étape de disposition de la composition dans le trou de forage ;
éventuellement, la formation du trou de forage dans l'élément, et éventuellement, le nettoyage d'au moins une partie du trou de forage, avant l'étape de disposition de la composition dans le trou de forage ;
dans lequel la composition est la composition de revêtement comme indiqué dans l'une quelconque des revendications 1 à 8 ;
dans lequel la composition est disposée au moins partiellement entre l'élément de fixation et le trou de forage pour former un joint ; et
dans lequel la composition se dilate et durcit dans le joint pour fixer l'élément de fixation dans le trou de forage.

15. Le procédé selon la revendication 14, dans lequel : i) la fixation est un ancrage ou une vis ; ii) l'élément comprend au moins un parmi le ciment, le béton ou le mortier ; ou iii) à la fois i) et ii).
